# EUROPEAN PATENT SPECIFICATION

(11) **EP 4 491 298 B1**
(45) Date of publication and mention of the grant of the patent: **02.12.2026**
(21) Application number: 23906476.9
(22) Date of filing: 30.10.2023
(51) Int. Cl.: B21K 1/04, B21J 5/02, B21J 5/06, F16C 33/64, B21J 1/02

(54) **METHOD FOR MANUFACTURING RING-SHAPED MEMBER, METHOD FOR MANUFACTURING BEARING, METHOD FOR MANUFACTURING MECHANICAL COMPONENT, METHOD FOR MANUFACTURING VEHICLE, METHOD FOR MANUFACTURING MECHANICAL DEVICE, RING-SHAPED MEMBER, BEARING ELEMENT, BEARING, MECHANICAL DEVICE, AND VEHICLE**
VERFAHREN ZUR HERSTELLUNG EINES RINGFÖRMIGEN ELEMENTS, EINES LAGERS, EINES MECHANISCHEN BAUTEILS, EINER MECHNISCHEN VORRICHTUNG, ODER EINES FAHRZEUGS SOWIE RINGFÖRMIGES ELEMENT, LAGERTEIL, LAGER, MECHANISCHES BAUTEIL UND FAHRZEUG
PROCÉDÉ DE FABRICATION D'ÉLÉMENT DE FORME ANNULAIRE, D'UN PALIER, D'UN COMPOSANT MÉCANIQUE, D'UN DISPOSITIF MÉCANIQUE, D'UN VÉHICULE, AINSI QUE ÉLÉMENT DE FORME ANNULAIRE, ÉLÉMENT DE PALIER, PALIER, DISPOSITIF MÉCANIQUE ET VÉHICULE

(30) Priority: 21.12.2022 JP 2022204298
(43) Date of publication of application: 15.01.2025
(73) Proprietor: NSK Ltd., Tokyo 141-8560 (JP)
(72) Inventor: WATANABE, Mizuki, Fujisawa-shi, Kanagawa 251-8501 (JP); MORI, Kouhei, Fujisawa-shi, Kanagawa 251-8501 (JP)
(74) Representative: Grünecker Patent- und Rechtsanwälte PartG mbB
(86) International application number: PCT/JP2023/039111
(87) International publication number: WO 2024/135104

(56) References cited:
- EP-A1- 4 019 160
- CN-A- 101 027 143
- CN-A- 114 406 604
- JP-A- 2012 045 577
- JP-A- 2012 101 264
- JP-A- 2018 530 432
- JP-A- H 079 064
- JP-A- H05 277 614
- JP-B2- 3 221 639

## Description

### TECHNICAL FIELD

The present invention relates to a method for manufacturing a ring-shaped member according to the preamble of claim 1. Such a method is known, for example, from JP 3 221639 B2, forming the basis for the preamble of claim 1.

### BACKGROUND ART

Conventionally, as a method for manufacturing a raceway of a rolling bearing, a method is known that includes a step of performing a forging process or the like on a metal material to obtain a ring-shaped member (a bearing element) having a rough shape of a raceway, and a step of performing finishing processes such as a cutting process and a grinding process on the ring-shaped member to obtain a raceway having a finished shape. All processes in these steps are cold processes.

Steps of obtaining the ring-shaped member include, for example, a step of performing a backward extrusion process, which is a forging process, on a disk-shaped first material to obtain a cylindrical second material with a bottom that has a recessed portion in a radially inner portion that opens to one side in an axial direction and a bottom portion on the other side of the recessed portion in the axial direction, and a step of punching out the bottom portion of the second material to obtain a ring-shaped member having an inner circumferential surface.

An inner diameter of the ring-shaped member obtained in this way is desirably close to an inner diameter of the raceway from the viewpoint of keeping the machining allowance for the finishing process to obtain the raceway to a minimum. That is, in the step of obtaining the ring-shaped member, it is desirable that the inner diameter of the recessed portion of the second material is close to the inner diameter of the raceway. In a case of responding to such a demand, as a difference between an outer diameter and an inner diameter of the raceway becomes smaller, a reduction in cross section of a workpiece (a material to be machined) when the recessed portion is formed increases.

Japanese Patent No. 3422941 describes a method for manufacturing a ring-shaped member made of a material with high hardness and low ductility that cannot normally be cold worked, such as high-hardness martensitic or mold steel. Specifically, the patent publication describes a method including a step of performing a backward extrusion process, which is a forging process, on a disk-shaped first material to obtain a cylindrical second material with a bottom that has a recessed portion in a radially inner portion that opens to one side in an axial direction and a bottom portion on the other side of the recessed portion in the axial direction, a step of obtaining a third material having a recessed portion having an inner diameter larger than the inner diameter of the recessed portion of the second material by an extrusion process to expand the inner diameter of the recessed portion of the second material, and a step of punching out a bottom portion of the third material together with an excess material portion formed by the extrusion process to obtain a ring-shaped member having an inner circumferential surface.

Japanese Patent Application, Publication No. 2009-297731 describes a method for manufacturing a ring-shaped member, including a step of pressing a pair of punches into an inner side of a cylindrical first material in a radial direction from both sides in an axial direction to enlarge an inner diameter of both sides of the first material in the axial direction and also to increase a circumferential length and an axial dimension of the first material, and thus obtaining a ring-shaped member.

### Citation List

### Patent Document

Patent Document 1: Japanese Patent No. 3422941
Patent Document 2: Japanese Patent Application, Publication No. 2009-297731
Patent document 3: Japanese Patent Publication No. JP 3 221639 B2

### SUMMARY OF INVENTION

### Technical Problem

The conventional method described in Japanese Patent No. 3422941 is intended for materials with high hardness and low ductility that cannot normally be cold worked, and the reduction in cross section of the workpiece is set to a small value. When the conventional method is applied to a cold forging process and the reduction in cross section of the workpiece is intended to be increased as described above, a forming load increases accordingly. As a result, inconveniences arise, such as a need for a high-power press, a shortened service life of a mold, and a workpiece becoming more susceptible to damage, such as cracks.

Furthermore, in the conventional method described in Japanese Patent No. 3422941, the inner diameter of the recessed portion is enlarged by an extrusion process, specifically, a punch which is pressed inward into the recessed portion in the radial direction causes a metal material present on a surface layer portion of an inner circumferential surface of the recessed portion to move to the bottom portion side of the recessed portion, thereby enlarging the inner diameter of the recessed portion. At this time, the metal material flows only in a direction in which the punch is pressed in. The metal material that moves to the bottom portion side of the recessed portion becomes the excess material portion, and is punched out together with the bottom portion of the recessed portion to be scrapped. Therefore, a yield of the material is reduced, and also a large load is required to punch out the thick bottom portion.

In the conventional method described in Japanese Patent Application, Publication No. 2009-297731, when the inner diameter of the portions of the first material on both sides in the axial direction is enlarged by pressing a pair of punches into the inner side of the cylindrical first material in the radial direction from both sides in the axial direction, the metal material constituting the first material also flows in a direction opposite to a pressing direction of each of the punches, which contributes to increasing the dimension of the workpiece in the axial direction. Therefore, the yield of the material can be improved accordingly.

However, in the conventional method described in Japanese Patent Application, Publication No. 2009-297731, a gap is provided in the radial direction between an outer circumferential surface of the first material before the pair of punches are pressed thereinto and an inner circumferential surface of a mold disposed therearound. Therefore, as the pair of punches are pressed in, a diameter of the outer circumferential surface of the first material increases, and large tensile stress in a circumferential direction acts on the workpiece. Thus, it makes the workpiece more susceptible to damage such as cracks.

An object of an aspect of the present invention is to provide a method for manufacturing a ring-shaped member that is advantageous for reducing manufacturing costs and/or improving product quality.

### Solution to Problem

A method for manufacturing a ring-shaped member according to the present invention includes the features of claim 1.

A method for manufacturing a bearing according to the present invention includes manufacturing a ring-shaped member with the above-described method for manufacturing a ring-shaped member.

A method for manufacturing a machine part according to the present invention includes manufacturing a machine part with the above-described method for manufacturing a ring-shaped member.

A method for manufacturing a mechanical device according to the present invention includes manufacturing a ring-shaped member with the above-described method for manufacturing a ring-shaped member.

A method for manufacturing a vehicle according to one aspect of the present invention includes manufacturing a ring-shaped member with the above-described method for manufacturing a ring-shaped member.

A bearing element according to the present invention includes the features of claim 8.

A bearing according to the present invention includes the above-described bearing element.

A mechanical device according to the present invention includes the above-described bearing.

A vehicle according to the present invention includes the above-described bearing.

### Advantageous Effects of Invention

According to an aspect of the present invention, it is possible to reduce manufacturing costs and/or to improve the quality of a product.

### BRIEF DESCRIPTION OF DRAWINGS

[FIG. 1] FIG. 1 is a partially cutaway perspective view showing an example of a rolling bearing.
[FIG. 2] FIG. 2 is a cross-sectional view showing a method for manufacturing a ring-shaped member according to a first example in the order of steps.
[FIG. 3] FIG. 3 is a view corresponding to part (c) of FIG. 1, showing a method for manufacturing a ring-shaped member according to a second example.
[FIG. 4] FIG. 4 is a cross-sectional view sequentially showing three steps of a method for manufacturing a ring-shaped member according to a third example.
[FIG. 5] FIG. 5 is a cross-sectional view showing one step of a method for manufacturing a ring-shaped member according to a fourth example.
[FIG. 6] FIG. 6 is a cross-sectional view showing one step of a method for manufacturing a ring-shaped member according to a fifth example, not forming part of the present invention.
[FIG. 7] FIG. 7 is a cross-sectional view showing a method for manufacturing a ring-shaped member according to a sixth example in the order of steps.
[FIG. 8] FIG. 8 is a cross-sectional view showing two steps of a method for manufacturing a ring-shaped member according to a seventh example.
[FIG. 9] FIG. 9 is a cross-sectional view showing one step of a method for manufacturing a ring-shaped member according to an eighth example.
[FIG. 10] FIG. 10 is a cross-sectional view showing a method for manufacturing a ring-shaped member according to a ninth example, not forming part of the present invention (no burr).
[FIG. 11] FIG. 11 is a schematic diagram showing an example of a metal flow in an axial cross section of a bearing element.
[FIG. 12] FIG. 12 is a schematic diagram showing an example of a metal flow in an axial cross section of a bearing element (an outer ring).
[FIG. 13] FIG. 13 is a schematic diagram of a motor to which a bearing is applied.

### DESCRIPTION OF EMBODIMENTS

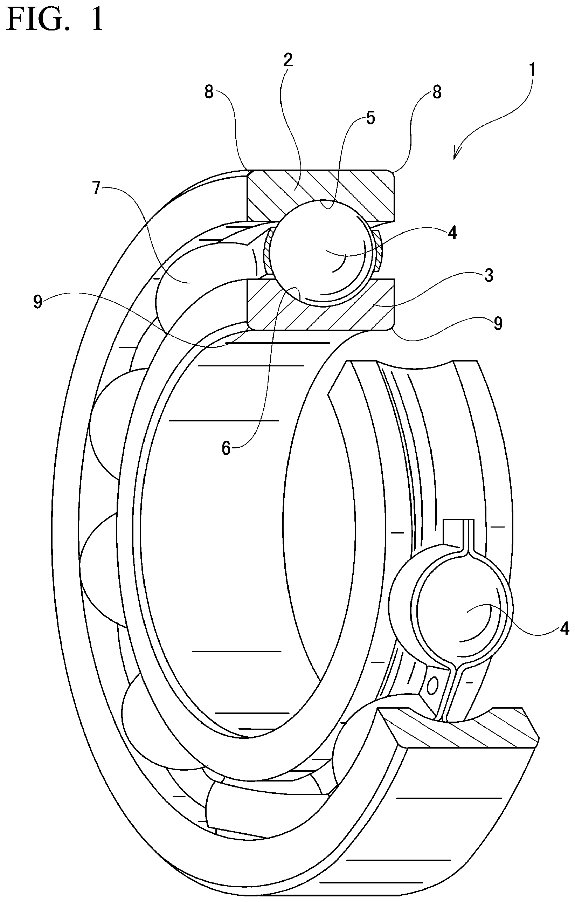

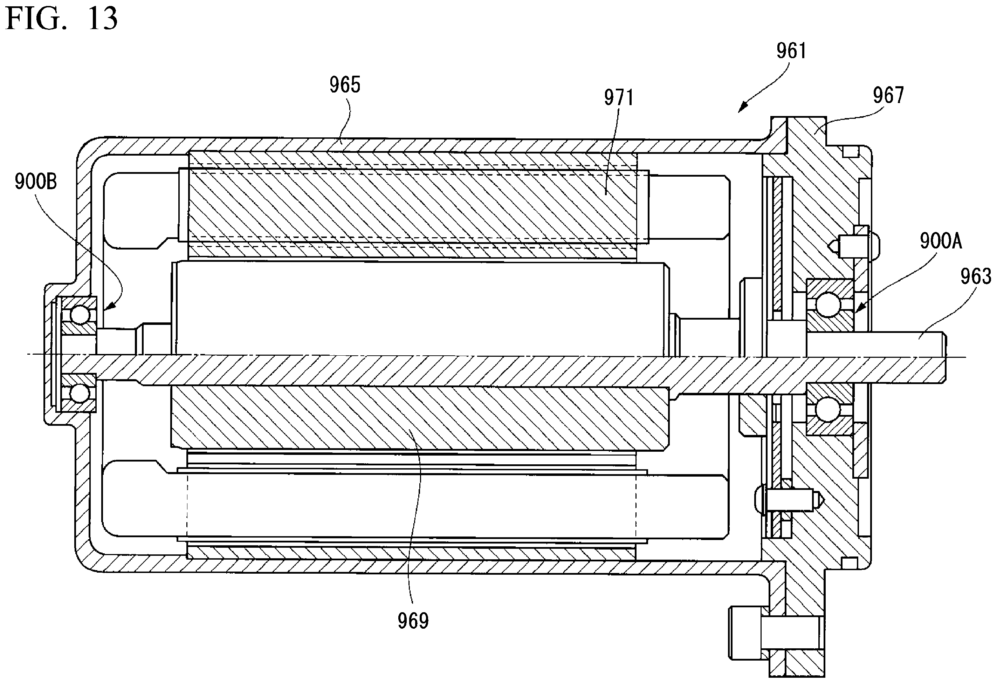

Hereinafter, embodiments of the present invention will be described with reference to FIGS. 1 to 13. The reference characters in parentheses correspond to reference characters shown in the description of the embodiments described below.

The method for manufacturing a ring-shaped member includes a first step (an initial preparation step), a second step (a recess formation step), a third step (a punching step) a fourth step (an inner circumferential wall deformation step) and a fifth step (an inner circumferential wall shaving step). According to this manufacturing method, it is possible to keep a forming load small and to improve efficiency of material usage (a material yield). In addition, the quality of a product (for example, the strength of a product) can be improved based on a flow pattern of a material.

The first step (the initial preparation step) includes preparing a workpiece (Wp). In the first step, the workpiece (Wp) having a predetermined shape is provided, or the workpiece (Wp) having the predetermined shape is obtained by a process in the first step. The workpiece (Wp) prepared in the first step is used in the next step.

Advantageously, the workpiece (Wp) prepared in the first step has a substantially cylindrical shape (a substantially disk shape) having a first axial surface, a second axial surface, and an outer circumferential surface. The second axial surface is a surface opposite to the first axial surface. For example, in the workpiece (Wp), an outer diameter (a width in a radial direction) is set to be larger than an axial length (a thickness, a height) between the first axial surface and the second axial surface. When the axial length of the workpiece (Wp) is defined as AL1 and the outer diameter is defined as DM1, AL1/DM1 may be set to, for example, about 1/2, 1/3, 1/4, 1/5, 1/6, 1/7, 1/8, 1/9, or 1/10 or less. The above values are just an example and other values may be applicable in other examples. Alternatively and/or additionally, in the first step, a workpiece having a shape that is a deformation of the above-described shape or a shape other than the above-described shape may be provided.

In one example, the first step may include an initial stage process to obtain a workpiece (Wp) of a predetermined shape. For example, the initial stage process may include a pressure treatment that reduces the axial length (the height) of the material and enlarges the outer diameter (radial width) thereof.

In one example, a punching tool (PT1) is used to form a workpiece (Wp) having a shape that is a deformation of a substantially cylindrical shape (a substantially disc shape) or a shape that is different from the substantially cylindrical shape. For example, the workpiece (Wp) obtained in the first step may have a thickness change (a capacity change) provided in a predetermined region in a radial direction. The thickness change may include a groove having a predetermined depth and extending in a circumferential direction, and/or a protrusion portion having a predetermined height and extending in the circumferential direction. In one example, for the workpiece (Wp) obtained in the first step, a punching tool (PT1,) is designed and an initial shape of the workpiece (Wp) is set on the basis of, for example, shape parameters of a final ring-shaped member and process parameters of the other steps. Due to shape control at such an initial stage, the efficiency of material usage (the material yield) is improved. Furthermore, the quality of a product can be improved (for example, the strength of the product improved) based on the flow pattern of the material.

The second step (the recess formation step) includes pressing a first member (14a, 13b, 14n) against the workpiece (Wp) to form a recesses (16, 16A, 16b) having a depth in the workpiece (Wp) in the axial direction. In one example, the second step may include a backward or forward extrusion process using a punching tool (PT2) that includes the first member (14a, 13b, 14n). In other examples, variations of the backward and forward extrusion processes or other techniques may be applied.

In one example, the punching tool (PT2) has a punch unit and a die unit, and is configured to be capable of relative movement in the axial direction between a punch and a die. The first member (14a, 13b, 14n) is provided on one of the punch unit and the die unit, and a support member (13, 14g, 12n) is provided on the other one. During the relative movement in the axial direction between the first member (14a, 13b, 14n) and the support member (13, 14g, 12n), the workpiece (Wp) is supported by the support member (13, 14g, 12n), and the relative movement is performed between the workpiece (Wp) and the first member (14a, 13b, 14n). A tip end portion of the first member (14a, 13b, 14n) is pressed against the workpiece (Wp) to form a depression (16, 16A, 16B) in the workpiece (Wp). An outer diameter of the tip end portion of the first member (14a, 13b, 14n) is set to be smaller than an inner diameter of the final ring-shaped member.

The workpiece (Wp) in which the depression (16, 16A, 16B) is formed in the second step has a bottom portion (17, 17A, 17B) and a peripheral portion (15b, 15A, 15B) of the depression (16, 16A, 16B). The bottom portion (17, 17A, 17B) of the depression (16, 16A, 16B) is provided relatively radially inward, and the peripheral portion (15b, 15A, 15B) is provided relatively radially outward. An inner diameter of the depression (16, 16A, 16B) is set to be smaller than the inner diameter of the final ring-shaped member. An axial length of the peripheral portion (15b, 15A, 15B) (a thickness of the peripheral portion, a distance in the axial direction between a first axial end surface and a second axial end surface of the peripheral portion) is set to be greater than an axial length of the bottom portion (17, 17A, 17B) (a thickness of the bottom portion, a distance in the axial direction between one surface and the other surface of the bottom portion). For example, when the axial length of the peripheral portion (15b, 15A, 15B) is defined as AL2 and the axial length of the bottom portion (17, 17A, 17B) is defined as AL3, AL2/AL3 may be set to about 1.1, 1.2, 1.3, 1.4, 1.5, 1.6, 1.7, 1.8, 1.9, 2, 3, 4, 5, 6, 7, 8, 9, 10, 20, or 30 or more. The above-described values are just an example, and other values may be applicable in other examples.

The third step (the punching step) includes punching out the bottom portion (17, 17A, 17B) of the depression (16, 16A, 16B) in the workpiece (Wp) using a second member (14b, 14p). In the third step, a circumferential wall (Cw) surrounding an opening (18z) is formed in the workpiece (Wp).

In one example, the third step may include a punching process using a punching tool (PT3) including the second member (14b, 14p). In another example, variations of the punching process or other techniques may be applied.

In one example, the punching tool (PT3) has a punch unit and a die unit, and is configured to be capable of relative movement in the axial direction between a punch and a die. The second member (14b, 14p) is provided on one of the punch unit and the die unit, and a support member (19, 12p) is provided on the other one. During the relative movement in the axial direction between the second member (14b, 14p) and the support member (19, 12p), the workpiece (Wp) is supported by the support member (19, 12p), and the relative movement is performed between the workpiece (Wp) and the second member (14b, 14p). The bottom portion (17, 17A, 17B) of the depression in the workpiece (Wp) is punched out by a tip end of the second member (14b, 14p). An outer diameter of a tip end portion of the second member (14b, 14p) is set to be smaller than the inner diameter of the final ring-shaped member.

Additionally, the third step includes shaping the workpiece (Wp) by the second member (14p) in accordance with a punching operation using the second member (14p). In one example, the second member (14p) may have a shaping part (73) disposed away from the tip end in the axial direction. For example, the shaping part (73) may have an inclined surface, a stepped surface, and/or a curved surface provided on the second member (14p). The shaping part (73) is provided to give a predetermined shape (contour) to the workpiece (Wp) and/or to adjust the shape of the workpiece (Wp) in accordance with the operation of punching out the bottom portion (17B) of the recess. For example, the workpiece (Wp) after the process in the third step may have an inclined surface, a stepped surface, and/or a curved surface. A punching tool (PT3) is designed, and the shape of the workpiece (Wp) after punching is set on the basis of the shape parameters of the final ring-shaped member and the process parameters of other steps. Due to such shape control, the efficiency of material usage (the material yield) is improved. Furthermore, the quality of a product (for example, the strength of the product) is improved based on the flow pattern of the material.

The fourth step (the inner circumferential wall deformation step) includes deforming the inner circumferential wall (Cw) of the workpiece (Wp) in accordance with relative movement between the workpiece (Wp) and a third member (14c, 14s). In the fourth step, the deformation of the inner circumferential wall (Cw) includes an increase in an axial length of the inner circumferential wall (Cw).

In one example, a punching tool (PT4) is used in the fourth step. In another example, a method without a punching tool may be applied. In one example, the punching tool (PT4) has a punch unit and a die unit, and is configured to be capable of relative movement in the axial direction between a punch and a die. The third member (14c, 14s) is provided on one of the punch unit and the die unit, and a support member (19a, 12s) is provided on the other one. During the relative movement between the third member (14c, 14s) and the support member (19a, 12s), the workpiece (Wp) is supported by the support member (19a, 12s), and the relative movement is performed between the workpiece (Wp) and the third member (14c, 14s). The third member (14c, 14s) has a process part (40x, 40y) that is in contact with the inner circumferential surface of the workpiece (Wp). The support member (19, 12s) has a support surface (19z,) that supports the axial surface of the workpiece (Wp). For example, the process part (40x, 40y) may have a large outer diameter portion (14x, 14y) having an outer diameter larger than other portions, and a transition portion (21, 21y) of which an outer diameter is gradually enlarged toward the large outer diameter portion (14x, 14y). A gap in the radial direction between the process part (40x, 40y) of the third member (14c, 14s) and an inner circumferential surface (12x) of the die unit is set to be smaller than a thickness of the circumferential wall (Cw) before the process.

In one example, the fourth step includes pressing the third member (14c, 14s) against the inner circumferential surface of the circumferential wall (Cw) to enlarge the inner diameter of the circumferential wall (Cw). For example, during the relative movement in the axial direction between the workpiece (Wp) and the third member (14c, 14s), the process part (40x, 40y) of the third member (14c, 14s) is pressed against the inner circumferential surface of the circumferential wall (Cw). As the third member (14c, 14s) moves on the inner circumferential surface of the circumferential wall (Cw), a material of the circumferential wall (Cw) flows. Due to the flow of the material, the inner diameter of the circumferential wall (Cw) is enlarged, and the axial length of the circumferential wall (Cw) extends.

In one example, the fourth step includes curbing the enlargement of the outer diameter of the circumferential wall (Cw) when the inner circumferential wall (Cw) is deformed. In a state in which the enlargement of the outer diameter is curbed, the inner diameter of the circumferential wall (Cw) is enlarged and the axial length of the circumferential wall (Cw) increases. As the material flows due to the expansion of the opening (18z) in the circumferential wall (Cw), the thickness of the circumferential wall (Cw) decreases and the circumferential wall (Cw) expands in the axial direction.

In one example, when the axial length of the circumferential wall (Cw) before the process in the fourth step is defined as AL4 and the axial length of the circumferential wall (Cw) after the process is defined as AL5, AL5/ALA may be set to about 1.1, 1.2, 1.3, 1.4, 1.5, 1.6, 1.7, 1.8, 1.9, 2, 3, 4, 5, 6, 7, 8, 9, or 10 or more. The above-described values are just an example, and other values may be applicable in other examples.

In one example, prior to the process using the third members (14c, 14s) in the fourth step, an orientation of the workpiece (Wp) set in the die unit may be reversed. For example, in a certain step, the second axial surface (AX2) of the workpiece (Wp) is supported by the die unit, and the second member (14b, 14p) is inserted into the workpiece (Wp) from the first axial surface (AX1) side. On the other hand, in the fourth step, the first axial surface (AX1) of the workpiece (Wp) is supported by the die unit, and the third member (14c, 14s) is inserted into the workpiece from the second axial surface (AX2) side.

In one example, in the fourth step, the workpiece (Wp) before the process may have a thickness change (a capacity change) provided in a predetermined region in the axial direction. In the fourth step, the third member (14s) is inserted into the workpiece (Wp) from the first axial surface side having a large capacity. As the third member (14s) moves in the axial direction, a flow occurs in which the material moves from the second axial surface side to the first axial surface side. As the third member (14s) moves in the axial direction, a part of the material flows from a larger capacity portion to a smaller capacity portion. Due to such a flow of the material, the capacity (the thickness) of the material is made uniform over the entire axial direction of the circumferential wall. The occurrence of burrs is curbed, and the efficiency of the material usage (the material yield) is improved. Furthermore, the quality of the product (for example, the strength of the product) is improved based on the flow pattern of the material.

In one embodiment, the second to fourth steps of the method for manufacturing a ring-shaped member include the second step of performing a backward extrusion process or a forward extrusion process on a disk-shaped first material (11, 11A) to obtain a cylindrical second material (15 and 15A) with a bottom which has a recessed portion (16, 16A) in a radially inner portion that opens to one side in an axial direction and a bottom portion (17, 17A) on the other side of the recessed portion (16, 16A) in the axial direction, the third step of punching out the bottom portion (17, 17A) of the second material (15, 15A) to obtain a third material (18, 18A) having an inner circumferential surface, and the fourth step of obtaining a ring-shaped member having an inner circumferential surface with an inner diameter larger than an inner diameter of the third material (18, 18A) and a main body portion (22, 22a, 22b, 22c, 22d, 22A, 22B, 22C) having an axial dimension larger than an axial dimension of the third material (18, 18A) by performing an ironing process on the inner circumferential surface of the third material (18, 18A) at least in a state in which an enlargement of a diameter of an outer circumferential surface of the third material (18, 18A) is prevented.

In one example, a cross section reduction rate when the second material (15, 15A) is obtained from the first material (11, 11A) is preferably 80% or less, more preferably 60% or less, and even more preferably 45% or less. Cross section reduction rate=("initial cross-sectional area"-"cross-sectional area after deformation")/("initial cross-sectional area").

It should be noted that, according to the invention, when the main body portion (22, 22a, 22b, 22c, 22d, 22A, 22B, 22C) is formed, at the same time, a burr (23, 23a, 23A) connected to an inner circumferential edge portion of an end portion of the main body portion (22, 22a, 22b, 22c, 22d, 22A, 22B, 22C) on the front side in a direction of the ironing process is formed. The shaving step removes the burr (23, 23a, 23A).

In one example, the method for manufacturing a ring-shaped member may include a step of compressing the main body portion (22, 22a, 22b, 22c, 22d, 22A, 22B 22C) in the axial direction.

In one example, the method for manufacturing the ring-shaped member may include a step of pressing a connection portion between at least one of side surfaces of the main body portion (22, 22a, 22b, 22c, 22d, 22A, 22B, 22C) in the axial direction and the outer circumferential surface or the inner circumferential surface to form a chamfered portion (8, 9).

In one example, the method for manufacturing a ring-shaped member may include a step of compressing the main body portion (22, 22a, 22b, 22c, 22d, 22A, 22B, 22C) in the axial direction while pressing a connection portion between one of side surfaces of the main body portion (22, 22a, 22b, 22c, 22d, 22A, 22B, 22C) in the axial direction and the outer circumferential surface or the inner circumferential surface to form a chamfered portion (8, 9).

In one example, the method for manufacturing a ring-shaped member may further include a step of, when the main body portion (22, 22a, 22b, 22c, 22d, 22A, 22B, 22C) is formed, and at the same time, a burr (23, 23a, 23A) connected to an inner circumferential edge portion of an end portion of the main body portion (22, 22a, 22b, 22c, 22d, 22A, 22B, 22C) on the front side in a direction of the ironing process is formed, pressing the connection portion between at least one of the side surfaces in the axial direction and the outer circumferential surface of the main body portion to form a chamfered portion and at the same time, knocking down the burr (23, 23a, 23A) inward in the radial direction.

In one example, the method for manufacturing a ring-shaped member realises the fourth step by ironing.When the main body portion (22, 22a, 22b, 22c, 22d, 22A, 22B, 22C) is formed, and at the same time, a burr (23, 23a, 23A) connected to an inner circumferential edge portion of an end portion of the main body portion (22, 22a, 22b, 22c, 22d, 22A, 22B, 22C) on the front side in a direction of the ironing process is formed, shaving and removing the inner circumferential portion of the main body portions (22, 22a, 22b, 22c, 22d, 22A, 22B, 22C) and the burr (23, 23a, 23A) in the axial direction takes place. Optionally, before shaving and removing the inner circumferential portion of the main body portion (22, 22a, 22b, 22c, 22d, 22A, 22B, 22C) and the burr (23, 23a, 23A) in the axial direction, the method may include compressing the main body portion (22, 22a, 22b, 22c, 22d, 22A, 22B, 22C) in the axial direction and at the same time, pressing the connection portion between the side surface of the main body portion (22, 22a, 22b, 22c, 22d, 22A, 22B, 22C) in the axial direction that is closer to the burr (23, 23a, 23A) and the outer circumferential surface to form a chamfered portion (8, 9), pressing the connection portion between the side surface of the main body portion (22, 22a, 22b, 22c, 22d, 22A, 22B, 22C) in the axial direction that is farther from the burr (23, 23a, 23A) and the outer circumferential surface to form a chamfered portion (8, 9) and at the same time knocking down the burr (23, 23a, 23A) inward in the radial direction.

The method for manufacturing a ring-shaped member may include, before shaving and removing the inner circumferential portion of the main body portions (22, 22a, 22b, 22c, 22d, 22A, 22B, 22C) and the burr (23, 23a, 23A) in the axial direction, compressing the main body portions (22, 22a, 22b, 22c, 22d, 22A, 22B, 22C) in the axial direction, knocking down the burr (23, 23a, 23A) inward in the radial direction.

The method for manufacturing a ring-shaped member may include, after shaving and removing the inner circumferential portion of the main body portion (22, 22a, 22b, 22c 22d, 22A, 22B, 22C) and the burr (23, 23a, 23A) in the axial direction, compressing the main body portion (22, 22a, 22b, 22c, 22d, 22A, 22B, 22C) in the axial direction and at the same time, pressing the connection portion between the side surfaces of the main body portion (22, 22a, 22b, 22c, 22d, 22A, 22B, 22C) on both sides in the axial direction and the inner circumferential surface to form a chamfered portion, forming an excess material portion (31) protruding inward in the radial direction at an intermediate portion of the main body portion (22, 22a, 22b, 22c, 22d, 22A, 22B, 22C) in the axial direction, and shaving and removing the excess material portion (31) in the axial direction.

The present invention also relates to, a method for manufacturing a bearing, which includes a step of manufacturing a ring-shaped member by the above-described manufacturing method, which is advantageous for reducing manufacturing costs and/or improving product reliability. In one example, the method for manufacturing a bearing may be used to manufacture a bearing having an outer ring having an outer ring raceway on an inner circumferential surface thereof, an inner ring having an inner ring raceway on an outer surface thereof, and a plurality of rolling elements disposed between the outer ring raceway and the inner ring raceway, and includes a step of manufacturing the outer ring and/or the inner ring by performing a finishing process on a ring-shaped member manufactured by the above-described method for manufacturing a ring-shaped member.

The present invention also relates to a method for manufacturing a machine part, which includes a step of manufacturing a ring-shaped member by the above-described manufacturing method, which is advantageous for reducing manufacturing costs and/or improving product reliability. For example, the machine part is manufactured by performing a finishing process on a ring-shaped member manufactured by the above-described method for manufacturing a ring-shaped member.

The present invention also relates to a method for manufacturing a vehicle, which includes a step of manufacturing a ring-shaped member by the above-described manufacturing method, which is advantageous for reducing manufacturing costs and/or improving product reliability. In one example, the method for manufacturing a vehicle may be used to manufacture a vehicle including a machine part and includes a step of manufacturing the machine part by the above-described method for manufacturing a machine part.

According to the invention, the ring-shaped member has a trace of having been manufactured by the above-described manufacturing method, which is advantageous for reducing manufacturing costs and/or improving product reliability.

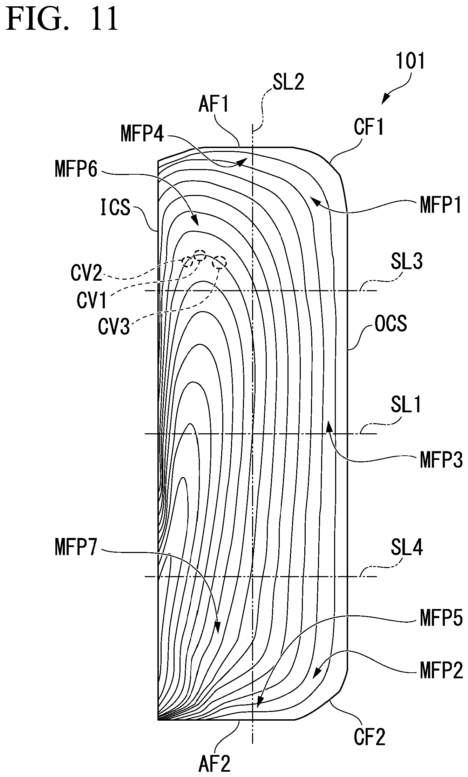

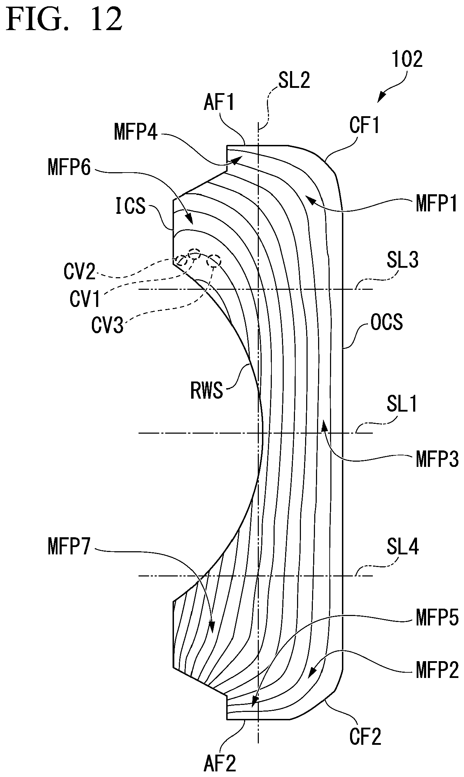

In one embodiment, the ring-shaped member is a bearing element that has a trace of having been manufactured by the above-described method for manufacturing a ring-shaped member (a bearing element). According to the invention, the trace is a metal flow (a metal fiber flow, a fibrous metal structure) observed in a cross section of the ring-shaped member (the bearing element). FIGS. 11 and 12 show an example of a metal flow in an cross section (an axial cross section) of a bearing element in an axial direction.

In one embodiment, as shown in FIGS. 11 and 12, the bearing element has a main body (101, 102) having a ring shape. The main body (101, 102) has a first axial surface (AF1) which is one end surface in the axial direction, a second axial surface (AF2) which is another end surface in the axial direction, an inner circumferential surface (ICS), an outer circumferential surface (OCS), a first chamfered portion (CF1) between the outer circumferential surface (OCS) and the first axial surface (AF1), and a second chamfered portion (CF2) between the outer circumferential surface (OCS) and the second axial surface (AF2). The metal flow of the main body (101, 102) includes a first pattern (MFP1) that is continuous along the first chamfered portion (CF1) in the vicinity of a surface of the first chamfered portion (CF1), a second pattern (MFP2) that is continuous along the second chamfered portion (CF2) in the vicinity of a surface of the second chamfered portion (CF2), a third pattern (MFP3) that is continuous along the outer circumferential surface (OCS) in the vicinity of the outer circumferential surface (OCS), a fourth pattern (MFP4) that is continuous along the first axial surface (AF1) in the vicinity of the first axial surface (AF1), a fifth pattern (MFP5) that is continuous along the second axial surface (AF2) in the vicinity of the second axial surface (AF2), a sixth pattern (MFP6) in the vicinity of the inner circumferential surface (ICS) close to the first axial surface (AF1), and a seventh pattern (MFP7) in the vicinity of the inner circumferential surface (ICS) close to the second axial surface (AF2). The sixth pattern (MFP6) includes a plurality of line elements having a convex shape toward the first axial surface (AF1). The seventh pattern (MFP7) includes a plurality of line elements that are continuous along the inner circumferential surface (ICS). An interval between the plurality of line elements in the seventh pattern (MFP7) is narrower than an interval between the plurality of line elements in the sixth pattern (MFP6). Such a bearing element is advantageous in terms of reducing manufacturing costs and/or improving quality. For example, a line element having a continuous metal flow is advantageous in terms of increasing strength of the main body.

The line elements in a region on the sixth pattern (MFP6) close to the first axial surface (AF1) have a relatively gradual bend, and the line elements in a region on the sixth pattern (MFP6) away from the first axial surface (AF1) have a relatively sharp bend. The sixth pattern (MFP6) has a curved pattern of which a curvature increases as a distance from the first axial surface (AF1) increases. The sixth pattern (MFP6) has the curved pattern of which a radius of curvature decreases as a distance from the first axial surface (AF1) increases.

In one example, an average value (a first average value) of the interval between the plurality of line elements in the sixth pattern (MFP6) is larger than an average value (a second average value) of the interval between the plurality of line elements in the seventh pattern (MFP7). For example, the first average value/the second average value may be 1.1, 1.2, 1.3, 1.4, 1.5, 1.6, 1.7, 1.8, 1.9, 2.0, 2.5, or 3.0 times or more.

In one example, the sixth pattern (MFP6) is disposed in a region between a first straight line (SL1) that passes through a center of the main body (101, 102) in the axial direction and extends in the radial direction and the first axial surface (AF1) and between a second straight line (SL2) that passes through a center in the radial direction between the inner circumferential surface (ICS) and the outer circumferential surface (OCS) in a cross section of the main body (101, 102) and extends in the axial direction and the inner circumferential surface (ICS). Additionally and/or alternatively, the sixth pattern (MFP6) is disposed in a region between a third straight line (SL3) that passes through a center in the axial direction between the first straight line (SL1) and the first axial surface (AF1) and extends in the radial direction and in a region between the second straight line (SL2) and the inner circumferential surface (ICS).

In one example, each of the plurality of line elements having a convex shape toward the first axial surface (AF1) in the sixth pattern (MFP6) includes a first portion (CV1) closest to the first axial surface (AF1), a second portion (CV2) disposed between the first portion (CV1) and the inner circumferential surface (ICS) in the radial direction, and a third portion (CV3) disposed between the first portion (CV1) and the outer circumferential surface (OCS) in the radial direction. The second portion (CV2) includes a curvature extending from the first portion (CV1) towards the second axial surface (AF2). The third portion (CV3) includes a curve that extends from the first portion (CV1) towards the second axial surface (AF2). The first portion (CV1) has a curve sharper than the second portion (CV2) and the third portion (CV3).

In one example, the seventh pattern (MFP7) is disposed in a region between the first straight line (SL1) that passes through the center of the main body (101, 102) in the axial direction and extends in the radial direction and the second axial surface (AF2), and between the second straight line (SL2) that passes through the center in the radial direction between the inner circumferential surface (ICS) and the outer circumferential surface (OCS) in the cross section of the main body (101, 102) and extends in the axial direction and the inner circumferential surface (ICS). Additionally and/or alternatively, the seventh pattern (MFP7) is disposed in a region between a fourth straight line (SL4) that passes through a center in the axial direction between the first straight line (SL1) and the second axial surface (AF2) and extends in the radial direction and the second axial surface (AF2), and in a region between the second straight line (SL2) and the inner circumferential surface (ICS).

In one example, the interval between the plurality of line elements in the seventh pattern (MFP7) changes to gradually narrow toward a virtual intersection point between the inner circumferential surface (ICS) and the second axial surface (AF2).

In one example, the seventh pattern (MFP7) includes a first line element closest to the inner circumferential surface (ICS) and extending along the inner circumferential surface (ICS), and a second line element closest to the outer circumferential surface (OCS). In a region relatively far from the second axial surface (AF2), an angle (a minor angle) between a straight line along the first linear element and a straight line along the second line element is about 40, 30, 20, 10, or 5 degrees or less. In a region relatively close to the second axial surface, an angle (a minor angle) between a straight line along the first line element and a straight line along the second linear element is about 40, 50, 60, 70, 80, or 85° or more.

In one example, the bearing element further includes a raceway surface (RWS) provided on the inner circumferential surface (ICS). The number of the plurality of line elements that intersect the raceway surface (RWS) between the straight line (SL1) that passes through a center of the raceway surface (RWS) and extends in the radial direction and the second axial surface (AF2) is greater than the number of the plurality of line elements that intersect the raceway surface (RWS) between the straight line (SL1) and the first axial surface (AF1).

The present invention also relates to a bearing that includes the above-described bearing element, which is advantageous for reducing cost of the bearing.

The present invention also relates to a machine that includes the above-described bearing, which is advantageous for reducing the cost of the bearing.

The present invention also relates to a vehicle that includes the above-described bearing, which is advantageous for reducing the cost of the bearing.

The method of the present disclosure may be implemented by appropriately combining the above-described aspects to an extent that no contradiction occurs.

The bearing element or bearing described above may be applied to, for example, bearings 900A and 900B or the like that support a rotating shaft 963 of a motor 961 shown in FIG. 12.

In FIG. 12, the motor 961 is a brushless motor, and includes a cylindrical center housing 965 and a substantially disk-shaped front housing 967 that closes one open end portion of the center housing 965. The freely rotatable rotating shaft 963 is supported inside the center housing 965 along an axis thereof via the bearings 900A and 900B disposed in the front housing 967 and a bottom portion of the center housing 965. A rotor 969 for driving the motor is provided around the rotating shaft 963, and a stator 971 is fixed to an inner circumferential surface of the center housing 965.

The motor 961 is generally mounted in a machine or a vehicle, and drives rotation of the rotating shaft 963 supported by the bearings 900A and 900B.

The bearing element or bearing may be applied to rotation support parts of linear motion devices such as machines having rotating parts, various manufacturing devices, for example, screw devices such as ball screw devices, and actuators (combinations of linear guide bearings and ball screws, XY tables, and the like). The bearing element or bearing may also be applied to steering devices such as wipers, power windows, power doors, power seats, steering columns (for example, power tilt-telescopic steering columns), universal joints, intermediate gears, rack and pinions, electric power steering devices, and worm reduction gears. Furthermore, the bearing element or bearing may be applied to various vehicles such as automobiles, motorcycles, trains, and the like. The bearing of this configuration may be suitably applied to any location in which there is relative rotation, which may lead to improved product quality and reduced costs.

As the bearing having the bearing element, various types of bearings such as a rolling bearing and a sliding bearing may be suitably applied. For example, the bearing elements may be applied to outer and inner rings of radial rolling bearings, outer and inner rings of radial cylindrical roller bearings using cylindrical rollers (including needles), and outer and inner rings of radial tapered roller bearings using tapered rollers.

### [First example]

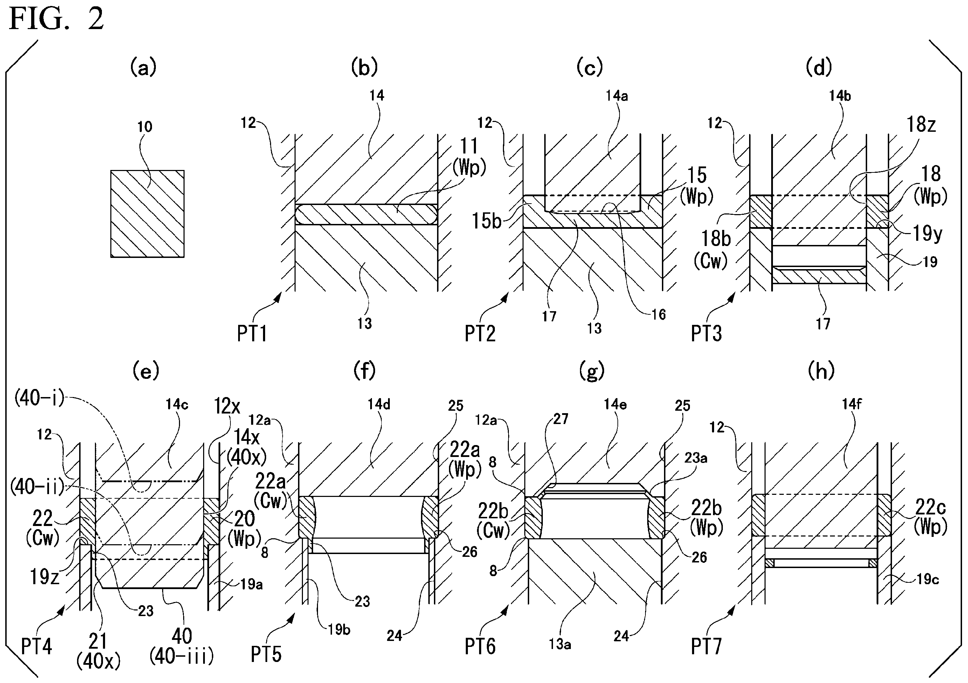

A first example will be described with reference to FIGS. 1 and 2.

This example is an example of manufacturing a ring-shaped member for obtaining an outer ring 2 of a rolling bearing 1 shown in FIG. 1.

However, a method for manufacturing a ring-shaped member according to one aspect may be used to manufacture any ring-shaped member. For example, the method for manufacturing a ring-shaped member according to one aspect may be used to manufacture a ring-shaped member (a bearing element) for obtaining the inner ring 3 of the rolling bearing 1 shown in FIG. 1, or an outer ring or an inner ring of a rolling bearing having a structure different from the example shown in FIG. 1. In this case, the outer ring and the inner ring may be manufactured by performing a finishing process such as a cutting process and a grinding process on the ring-shaped member. Moreover, the method for manufacturing a ring-shaped member according to one aspect may also be used to manufacture a ring-shaped member for obtaining various machine parts that constitute a vehicle or a mechanical device. In this case, the machine parts may be manufactured by performing a finishing process such as a cutting process and a grinding process on the ring-shaped member.

The rolling bearing 1 shown in FIG. 1 is configured of a single-row deep groove ball bearing, and includes an outer ring (a ring-shaped member, a bearing element) 2, an inner ring (a ring-shaped member, a bearing element) 3, and a plurality of rolling elements 4.

The outer ring 2 is made of a hard metal such as bearing steel or hardened carbon steel, and has a deep-groove outer ring raceway 5 on an inner circumferential surface thereof. The inner ring 3 is made of a hard metal such as bearing steel or hardened carbon steel, and has a deep-groove inner ring raceway 6 on an outer circumferential surface thereof. The plurality of rolling elements 4 are configured of balls and are disposed between the outer ring raceway 5 and the inner ring raceway 6 in a state in which they are held by a holder 7. Each of the rolling elements 4 is made of a hard metal such as bearing steel or hardened carbon steel, or ceramic.

In the illustrated example, the outer ring 2 has a chamfered portion 8 having an arc-shaped cross section at a connection portion between the outer circumferential surface and both side surfaces in the axial direction. The chamfered portion 8 may be used, for example, as a guide surface when the outer ring 2 is fitted into an inner circumferential surface of a housing. The inner ring 3 has a chamfered portion 9 having an arc-shaped cross section at a connection portion between the inner circumferential surface and both side surfaces in the axial direction. The chamfered portion 9 may be used, for example, as a guide surface when the inner ring 3 is fitted into an outer circumferential surface of a rotating shaft.

A method for manufacturing the outer ring 2 in this example includes a main step and an additional step of obtaining a ring-shaped member, and a finishing step of obtaining a final shape of the outer ring 2 by a subsequent finishing process. All processes in these steps are cold processes.

In the main step, a disk-shaped first material 11 is prepared as shown in FIG. 2(b). In this example, the first material 11 has an axial dimension smaller than that of the outer ring 2 and an outer diameter equal to that of the outer ring 2.

In the following description of this example, an up-down direction refers to an up-down direction in FIG. 2(a) to FIG. 2(h). However, the up-down direction in FIG. 2(a) to FIG. 2(h) does not necessarily coincide with the up-down direction during a process. In FIG. 2(a) to FIG. 2(h), the axial direction of each of the illustrated members coincides with the up-down direction.

In this example, a columnar metallic billet 10 as shown in FIG. 1(a) is subjected to an upsetting process to obtain a first material 11. The billet 10 has an axial dimension larger than an axial dimension of the first material 11 and an outer diameter smaller than an outer diameter of the first material 11. The upsetting process is performed using a mold (a punching tool, a tool set) PT1 as shown in FIG. 2(b).

The mold (the punching tool, the tool set) shown in FIG. 2(b) includes a die 12, a die pin 13, and a punch 14. The die 12 has a cylindrical inner circumferential surface on the inside of which the die pin 13 and the punch 14 are disposed. An inner diameter of the die 12 is the same as an outer diameter of the first material 11. The die pin 13 is formed to have a columnar shape and has an outer diameter slightly smaller than the inner diameter of the die 12. The die pin 13 is disposed inside a lower portion of the die 12 without any wobble in the radial direction. The punch 14 is formed to have a columnar shape and has an outer diameter slightly smaller than the inner diameter of the die 12. The punch 14 is disposed inside an upper portion of the die 12 without any wobble in the radial direction.

When the upsetting process is performed on the billet 10 using the die shown in FIG. 2(b), the punch 14 is retracted upward and the billet 10 is placed on a center portion of an upper surface of the die pin 13. In this state, the punch 14 is moved down to crush the billet 10 in the axial direction between the upper surface of the die pin 13 and the lower surface of the punch 14 to reduce the axial dimension and to enlarge the outer diameter. Thus, the disk-shaped first material 11 is obtained.

In one example of the step shown in FIG. 2(b), an initial stage process may include a press process (an upsetting process or the like) using the punching tool PT1. In FIG. 2(b), a material supported by the die pin 13 is crushed by the punch 14 to form a workpiece Wp of a predetermined shape. In other examples, variations of the press process (the upsetting process or the like) or other techniques may be applied.

Additionally and/or alternatively, the first material 11 may be obtained in other methods, for example by performing a cutting process on a metal material, by performing a punching process on a metal plate, or by cutting a metal bar into a disk shape.

In the main step, a backward extrusion process is performed on the disk-shaped first material 11 to obtain a second material 15 as shown in FIG. 2(c), specifically, a cylindrical second material with a bottom which has a recessed portion 16 on an inner portion thereof in the radial direction that opens to one side (the upper side in FIG. 2(c)) in the axial direction and a bottom portion 17 on the other side of the recessed portion 16 (the lower side in FIG. 2(c)) in the axial direction. In this example, the backward extrusion process is performed using a mold (a punching tool, a tool set) PT2 as shown in FIG. 2(c).

The mold shown in FIG. 2(c) includes a die 12 and a die pin 13 similar to those in FIG. 2(b), and a columnar punch 14a having an outer diameter smaller than that of the punch 14 in FIG. 2(b). The punch 14a is disposed coaxially inside an upper portion of the die 12.

When the backward extrusion processing is performed on the first material 11 using the die shown in FIG. 2(c), the punch 14a is retracted upward, and the first material 11 is fitted into the die 12 without any wobble in the radial direction, and is placed on an upper surface of the die pin 13. In this state, the punch 14a is moved down to crush a radially inner portion of the first material 11 in the axial direction between the upper surface of the die pin 13 and the lower surface of the punch 14a. Thus, the metal material of the radially inner portion is caused to flow outward in the radial direction to enlarge an axial dimension of the radially outer portion and to form the recessed portion 16 that opens upward in the radially inner portion, and thus the cylindrical second material 15 with a bottom which has the recessed portion 16 and the bottom portion 17 on the lower side of the recessed portion 16.

In an example of the backward extrusion process shown in FIG. 2(c), the punch 14a (the first member) moves relatively to the workpiece (Wp) supported by the die pin 13. The punch 14a moves in the axial direction so as to approach the die pin 13. As the workpiece Wp and the punch 14a move relative to each other in the axial direction, the punch 14a is pressed against an inner region of the workpiece Wp in the radial direction, and a tip end portion of the punch 14a is inserted into the workpiece Wp. A part of the material flows from the radially inner side to the radially outer side of the workpiece Wp. Also, in an outer region of the workpiece Wp in the radial direction, the material flows in a direction opposite to a movement direction of the punch 14a (backward flow). In the workpiece Wp, a thickness of an inner region in the radial direction decreases, and a thickness of an outer region in the radial direction increases. The recessed portion (a depression) 16 is formed in the inner region of the workpiece Wp in the radial direction, and a peripheral portion 15b surrounding the depression 16 is formed in the outer region in the radial direction. As the axial length of the peripheral portion 15b increases, the overall axial length of the workpiece Wp (a distance between a first axial end and a second axial end) increases.

The recessed portion 16 is a portion formed by pressing in a lower end portion of the punch 14a. An inner diameter of the recessed portion 16 is smaller than an inner diameter of a cylindrical main body portion 22 (refer to FIG. 2(e)) constituting the ring-shaped member 20. The bottom portion 17 is a portion formed by crushing a radially inner portion of the first material 11 in the axial direction. That is, an axial dimension of the bottom portion 17 is smaller than an axial dimension of the first material 11. In the second material 15, a cylindrical outer portion in the axial direction that is present around the recessed portion 16 and the bottom portion 17 is a portion of which an axial dimension is enlarged by causing the metal material of the radially inner portion of the first material 11 to flow outward in the radial direction. That is, the axial dimension of the cylindrical radially outer portion is larger than the axial dimension of the first material 11. The second material 15 has an axial dimension smaller than an axial dimension of the outer ring 2 and an outer diameter equal to the outer diameter of the outer ring 2.

In this way, in this example, when the ring-shaped member 20 (refer to FIG. 2(e)) is manufactured to obtain the outer ring 2, a recessed portion having an inner diameter equal to the inner diameter of the main body portion 22 of the ring-shaped member 20 is not formed in the workpiece by a cold forging process (a backward extrusion process), but the recessed portion 16 having an inner diameter smaller than the inner diameter of the main body portion 22 is formed, thereby keeping the cross section reduction rate of the workpiece small when the recessed portion 16 is formed. Therefore, the forming load during the cold forging process can be kept small.

When the manufacturing method of this example is performed, the cross section reduction rate when the second material 15 is obtained from the first material 11 is preferably 80% or less, more preferably 60% or less, and even more preferably 45% or less.

In the main step, the bottom portion 17 of the second material 15 is punched out to obtain a third material 18 as shown in FIG. 2(d), specifically, a cylindrical third material 18 having an inner circumferential surface. In this example, the punching is performed using the mold (the punching tool, the tool set) PT3 as shown in FIG. 2(d).

The mold shown in FIG. 2(d) includes a die 12 similar to that in FIG. 2(b), a columnar punch 14b having the same outer diameter as the punch 14a in FIG. 2(c), and a sleeve 19. The sleeve 19 is formed to have a cylindrical shape and has an outer diameter slightly smaller than the inner diameter of the die 12 and an inner diameter that is the same as or slightly larger than the inner diameter of the recessed portion 16 of the second material 15. The sleeve 19 is disposed inside the lower portion of the die 12 without any wobble in the radial direction.

When the bottom portion 17 of the second material 15 is punched out using the mold shown in FIG. 2(d), in a state in which the punch 14b is retracted upward and the bottom portion 17 of the second material 15 is disposed downward, the second material 15 is fitted into the die 12 without any wobble in the radial direction and is placed on an upper surface of the sleeve 19. In this state, the punch 14b is moved down to enter the inside of the recessed portion 16 of the second material 15, and further the bottom portion 17 of the second material 15 is punched out by the punch 14b. Thus, a cylindrical third material 18 which has an inner circumferential surface having an inner diameter smaller than the inner diameter of the main body portion 22 of the ring-shaped member 20 is obtained. In this example, since the axial dimension of the bottom portion 17 is reduced compared to the axial dimension of the first material 11 by the backward extrusion process described above, an amount of the metal material punched out to form the bottom portion 17 may be reduced. The third material 18 has an axial dimension smaller than the axial dimension of the outer ring 2 and an outer diameter equal to the outer diameter of the outer ring 2.

In an example of the step shown in FIG. 2(d), the punch 14b (the second member) moves relatively to the workpiece Wp supported by the sleeve 19. The punch 14a moves in the axial direction so as to approach the workpiece Wp, and a tip end of the punch 14a is pressed against the bottom portion 17 of the depression in the workpiece Wp. Furthermore, the tip end of the punch 14a moves to a position beyond the workpiece Wp. That is, during the relative movement between the workpiece Wp and the punch 14b, in a state in which an axial surface of the workpiece Wp is supported by a support surface 19y of the sleeve 19, the tip end of the punch 14a and the support surface 19y of the sleeve 19 pass each other in the axial direction. The bottom portion 17 of the depression is punched out using the punch 14a, and a circumferential wall Cw surrounding an opening 18z is formed.

In the main step, in a state in which the enlargement of the diameter of the outer circumferential surface of the third material 18 is prevented, an ironing process is performed on the inner circumferential surface of the third material 18 to form a cylindrical main body portion 22 that has an inner circumferential surface having an inner diameter larger than the inner diameter of the third material 18 and an axial dimension larger than the axial dimension of the third material 18, thereby obtaining a ring-shaped member 20 as shown in FIG. 2(e). In this example, the ironing process is performed using a mold (a punching tool, a tool set) PT4 as shown in FIG. 2(e).

The mold shown in FIG. 2(e) includes a die 12 similar to that in FIG. 2(b), a cylindrical sleeve 19a, and a columnar punch 14c. The sleeve 19a has an outer diameter slightly smaller than the inner diameter of the die 12 and an inner diameter larger than the inner diameter of the third material 18, and is disposed inside a lower portion of the die 12 without any wobble in the radial direction. The punch 14c has an ironing surface 21 on an outer circumferential surface of a lower end portion. The ironing surface 21 has a substantially conical cylindrical shape with an outer diameter that decreases toward the lower side. An outer diameter of the lower end portion which is the minimum diameter portion of the ironing surface 21 is smaller than the inner diameter of the third material 18. An outer diameter of the upper end portion which is the maximum diameter portion of the ironing surface 21 is larger than the inner diameter of the third material 18 and slightly smaller than the inner diameter of the sleeve 19a. A portion of the outer circumferential surface of the punch 14c that is located above the ironing surface 21 is formed of a cylindrical surface having an outer diameter equal to an outer diameter of an upper end portion of the ironing surface 21.

When the ironing process is performed on the inner circumferential surface of the third material 18 using the mold shown in FIG. 2(e), the outer circumferential surface of the third material 18 is restrained to prevent a diameter of the outer circumferential surface from increasing by retracting the punch 14c upward and fitting the third material 18 into the die 12 without any wobble in the radial direction, and a lower surface of the third material 18 is supported by the upper surface of the sleeve 19a. In this state, the punch 14c is moved down, and the ironing surface 21 is pressed downward from above into the inside of the third material 18, and then passed through the inside in the axial direction, thereby performing the ironing process on the inner circumferential surface of the third material 18. Thus, as the diameter of the inner circumferential surface of the third material 18 is enlarged, a part of the metal material constituting the third material 18 is caused to flow in a direction opposite to a pressing direction of the punch 14c, thereby enlarging the axial dimension of the third material 18 and forming a cylindrical main body portion 22 having an inner diameter larger than the inner diameter of the third material 18 and an axial dimension larger than the axial dimension of the third material 18. The main body portion 22 has an axial dimension larger than the axial dimension of the outer ring 2 and an outer diameter equal to the outer diameter of the outer ring 2. In this example, the ring-shaped member 20 having the main body portion 22 is obtained by performing the process as described above. In the state shown in FIG. 2(e), since a large frictional force is acting between the punch 14c and the main body portion 22, when the punch 14c is returned upward, while the upper surface of the main body portion 22 is pressed down by a retaining sleeve (not shown), the punch 14c is returned upward relative to the main body portion 22 and the retaining sleeve. Thus, the punch 14c and the main body portion 22 are separated.

In an example of the step shown in FIG. 2(e), the inner circumferential surface 12 x of the die unit curbs the enlargement of the outer diameter of the circumferential wall Cw. In FIG. 2(e), the die unit has an inner circumferential surface 12x that faces the outer circumferential surface of the workpiece Wp, and a support surface 19z that supports the axial surface of the workpiece Wp. For example, an inner diameter of the inner circumferential surface 12x of the die unit is set to be substantially equal to or approximately equal to the outer diameter of the circumferential wall Cw before the process. Also, a gap in the radial direction between a process part 40x of the punch 14c (the third member) and the inner circumferential surface 12x of the die unit is set to be smaller than a thickness of the circumferential wall Cw before the process. During the relative movement between the workpiece Wp and the punch 14c, the punch 14c approaches the first axial end of the workpiece Wp from a state (40-i) in which it is separated from the workpiece Wp, and the punch 14c is inserted into the workpiece Wp in the axial direction from the first axial end side to the second axial end side of the workpiece Wp. In a state in which the axial surface of the workpiece Wp is supported by the support surface 19z of the sleeve 19a (the support member), the process part 40x pressed against the inner circumferential surface of the circumferential wall Cw moves from one axial side to the other axial side. The material of the workpiece Wp flows, and the workpiece Wp is deformed. The axial end of the punch 14c and the support surface 19z of the sleeve 19a approach each other relatively in the axial direction and reach substantially the same position (40-ii). Furthermore, during the relative movement between the workpiece Wp and the punch 14c, the tip end of the punch 14c and the support surface 19z of the sleeve 19a pass each other in the axial direction (40-iii). The process part 40x of the punch 14c is pressed against the inner circumferential surface of the circumferential wall Cw over the entire axial direction of the workpiece Wp. In a state in which the enlargement of the outer diameter of the circumferential wall Cw is curbed by the inner circumferential surface 12x of the die unit, the inner diameter of the circumferential wall Cw is enlarged on the basis of the flow of the material. The inner diameter of the circumferential wall Cw is enlarged while the outer diameter is maintained over the entire axial and circumferential directions. The overall thickness of the circumferential wall Cw decreases, and the axial length of the circumferential wall Cw increases.

As described above, in this example, the inner diameter of the workpiece used to manufacture the outer ring 2 is enlarged by the cold forging process (the ironing process), thereby keeping the cross section reduction rate of the workpiece small. Therefore, the forming load during the cold forging process can be kept small.

In addition, in this example, when the inner diameter of the workpiece is enlarged by the cold forging process (the ironing process), the flow of the metal material occurs not only in the pressing direction of the punch 14c but also in the direction opposite to the pressing direction of the punch 14c, which is useful for enlarging the axial dimension of the workpiece. Thus, the yield of metal material is easily improved.

Furthermore, in this example, a step of enlarging the inner diameter of the workpiece by the cold forging process (the ironing process) is performed while the enlargement of the diameter of the outer circumferential surface of the workpiece is prevented. Therefore, the diameter of the outer circumferential surface of the workpiece is not enlarged during the process, and large circumferential tensile stress is not applied to the workpiece. Therefore, damage such as cracks is unlikely to occur in the workpiece.

In this example, at the same time as the main body portion 22 is formed, another part of the metal material constituting the third material 18 flows in the pressing direction of the punch 14c, and thus a burr 23 is formed. The burr 23 is connected to an inner circumferential edge portion of an end portion of the main body portion 22 on the lower side which is the front side in the ironing direction, and has a cylindrical shape that extends in the axial direction. Therefore, in this example, as described below, a step of removing the burrs 23 is provided as an additional step.

When the inner diameter of the sleeve 19a is set to be the same as the outer diameter of the upper end portion which is the maximum diameter portion of the ironing surface 21, there is a possibility that the burr 23 may not be formed during the ironing process. When the burr 23 is not formed, the process for removing the burr 23 is not required in the subsequent step.

In this example, in order to apply the ring-shaped member to the outer ring 2 of the rolling bearing 1, the main step is followed by the steps of FIGS. 2(f), 2(g), and 2(h) described below. Steps 2(f) and 2(g) are optional and additional steps in manufacturing the ring-shaped member according to a final desired structure and application of the ring-shaped member.

In the step shown in FIG. 2(f), the main body portion 22 of the ring-shaped member 20 is compressed in the axial direction, specifically, the axial dimension of the main body portion 22 is compressed to the same size as the axial dimension of the outer ring 2, thereby obtaining a ring-shaped member 20a. In this example, the compression is performed using a mold (a punching tool, a tool set) PT5 as shown in FIG. 2(f).

The mold shown in FIG. 2(f) includes a die 12a, a cylindrical sleeve 19b, and a columnar punch 14d. The die 12a has a stepped cylindrical inner circumferential surface. That is, the inner circumferential surface of the die 12a is formed by connecting a lower small diameter cylindrical surface portion 24 and an upper large diameter cylindrical surface portion 25 which are disposed coaxially with each other by a chamfering process surface 26 which is a stepped surface. The small diameter cylindrical surface portion 24 has an inner diameter smaller than the outer diameter of the main body portion 22 of the ring-shaped member 20. The large diameter cylindrical surface portion 25 has an inner diameter equal to the inner diameter of the die 12 in FIGS. 2(b) to 2 (e), that is, an inner diameter equal to the outer diameter of the main body portion 22. The chamfering process surface 26 has a cross-sectional shape of a concave arc that is curved and inclined in an upward direction as it goes outward in the radial direction. The sleeve 19b has an outer diameter slightly smaller than the inner diameter of the small diameter cylindrical surface portion 24, and an inner diameter equal to or slightly larger than the outer diameter of the burr 23 of the ring-shaped member 20. The sleeve 19b is disposed inside the small diameter cylindrical surface portion 24 without any wobble in the radial direction. The punch 14d has an outer diameter slightly smaller than the inner diameter of the large diameter cylindrical surface portion 25, and is disposed inside the large diameter cylindrical surface portion 25 without any wobble in the radial direction.

When the main body portion 22 of the ring-shaped member 20 is compressed in the axial direction using the mold shown in FIG. 2(f), in a state in which the punch 14d is retracted upward and the burr 23 of the ring-shaped member 20 faces downward, the main body portion 22 is fitted into the large diameter cylindrical surface portion 25 without any wobble in the radial direction, thus the outer circumferential surface of the main body portion 22 is restrained to prevent the enlargement of the diameter of the outer circumferential surface, and the lower surface of the main body portion 22 is supported by the chamfering process surface 26 and the upper surface of the sleeve 19b. In this state, the punch 14d is moved down to compress the main body portion 22 in the axial direction between the chamfering process surface 26, the upper surface of the sleeve 19b, and the lower surface of the punch 14d. Thus, the main body portion 22 is formed into a cylindrical main body portion 22a having an axial dimension equal to that of the outer ring 2, and thus a ring-shaped member 20a having the main body portion 22a and the burr 23 is obtained. The main body portion 22a has an outer diameter that is the same as the outer diameter of the outer ring 2. Due to the deformation according to the compression described above, the inner circumferential surface of the main body portion 22a has a convex arc-shaped cross-sectional shape with a center portion in the axial direction protruding furthest inward in the radial direction, and at least an intermediate portion in the axial direction is located inward in the radial direction with respect to the inner circumferential surface of the burr 23.

In this example, in the step of forming the main body portion 22a described above, the main body portion 22 is compressed in the axial direction to form the main body portion 22a, and at the same time, a connection portion between an axial side surface closer to the burr 23 which is the lower surface of the main body portion 22, and an outer circumferential surface is pressed strongly against the chamfering process surface 26, and thus a chamfered portion 8 is formed at the connection portion.

In this way, in this example, since the main body portion 22a is formed by compressing the main body portion 22, and the chamfered portion 8 is formed at the same time, the outer ring 2 can be manufactured more efficiently.

In the step shown in FIG. 2(g), a ring-shaped member 20b is obtained by performing a process on the ring-shaped member 20a. In this example, the process is performed using a mold (a punching tool, a tool set) PT6 as shown in FIG. 2(g).

The mold shown in FIG. 2(g) includes a die 12a similar to that shown in FIG. 2(f), a columnar die pin 13a, and a columnar punch 14e. The die pin 13a has an outer diameter slightly smaller than the inner diameter of the small diameter cylindrical surface portion 24 of the die 12a, and is disposed inside the small diameter cylindrical surface portion 24 without any wobble in the radial direction. The punch 14e has an outer diameter slightly smaller than the large diameter cylindrical surface portion 25 of the die 12a. The punch 14e has a recessed portion in a center of a lower surface thereof, and an inner circumferential surface of the recessed portion is configured as a conical cylindrical burr knockdown surface 27 of which an inner diameter decreases toward the upper side. An inner diameter of a lower end portion, which is the maximum diameter portion, of the burr knockdown surface 27 is the same as or slightly larger than an outer diameter of the burr 23 of the ring-shaped member 20a. The burr knockdown surface 27 has an axial dimension larger than that of the burr 23. The punch 14e is disposed inside the large diameter cylindrical surface portion 25 without any wobble in the radial direction.

When a process of the ring-shaped member 20a is performed using the mold shown in FIG. 2(g), in a state in which the punch 14e is retracted upward, and the ring-shaped member 20a is turned upside down from the state shown in FIG. 2(f) so that the burr 23 is directed upward, the main body portion 22a of the ring-shaped member 20a is fitted into the large diameter cylindrical surface portion 25 of the die 12a without any wobble in the radial direction, thus the outer circumferential surface of the main body portion 22a is restrained to prevent the diameter of the outer circumferential surface from being enlarged, and the lower surface of the main body portion 22a is supported by the chamfering process surface 26 and the upper surface of the die pin 13a. In this state, the punch 14e is moved down to press the burr knockdown surface 27 against the cylindrical burr 23 from above, and thus the burr 23 is knocked down inward in the radial direction. Specifically, the burr 23 is deformed into a conical cylindrical shape along the burr knockdown surface 27 to form the burr 23a. The reason why the cylindrical burr 23 is deformed into the conical cylindrical burr 23a is to make it easier to remove the burr by shaving in the axial direction which will be described below. An outer diameter of a base end portion of the burr 23a (the lower end in FIG. 2(g)) is the same as the outer diameter of the burr 23. In addition, by pressing the upper surface of the main body portion 22a with a portion of the lower surface of the punch 14e that is located radially outward from the burr knockdown surface 27, the connection portion between the side surface in the axial direction on the side away from the burr 23 that is the lower surface of the main body portion 22a, and the outer circumferential surface is pressed strongly against the chamfering process surface 26, and the chamfered portion 8 is formed at the connection portion. That is, the cylindrical main body portion 22b having chamfered portions 8 at each of the connection portions between the outer circumferential surface and both side surfaces in the axial direction is formed.

As described above, in one step, the chamfered portion 8 is formed and at the same time, the burr 23 is knocked down inward in the radial direction to obtain the ring-shaped member 20b having the main body portion 22b and the burr 23a. The main body portion 22b has an axial dimension that is the same as the axial dimension of the outer ring 2 and an outer diameter that is the same as the outer diameter of the outer ring 2.

In the step shown in FIG. 2(h), a ring-shaped member 20c is obtained by performing a process on the ring-shaped member 20b. In this example, the process is performed using a mold (a punching tool, a tool set) PT6 as shown in FIG. 2(h).

The mold shown in FIG. 2(h) includes a die 12 similar to that in FIG. 2(b), a cylindrical sleeve 19c, and a columnar punch 14f. The sleeve 19c has an outer diameter slightly smaller than an inner diameter of the die 12, and an inner diameter the same as or slightly larger than the inner diameter of the outer ring 2. The sleeve 19c is disposed inside the lower portion of the die 12 without any wobble in the radial direction. The punch 14f has an outer diameter equal to the inner diameter of the outer ring 2 and is disposed coaxially inside the die 12.

When a process is performed on the ring-shaped member 20b using the mold shown in FIG. 2(h), in a state in which the punch 14f is retreated upward, and the burr 23a of the ring-shaped member 20b is directed upward or downward, the main body portion 22b of the ring-shaped member 20b is fitted into the die 12 without any wobble in the radial direction, and the lower surface of the main body portion 22b is supported by the upper surface of the sleeve 19c. In this state, the punch 14f is moved down to shave and remove the inner circumferential portion of the main body portion 22b and the burr 23a in the axial direction by the punch 14f. Thus, a cylindrical ring-shaped member 20c is obtained. The ring-shaped member 20c has an axial dimension the same as the axial dimension of the outer ring 2, an outer diameter the same as the outer diameter of the outer ring 2, and an inner diameter the same as the inner diameter of the outer ring 2.

In this example, a finishing step of performing a cutting process, a grinding process, or the like is then applied to the ring-shaped member 20c to obtain the outer ring 2 having a finished shape.

As described above, according to the method for manufacturing a ring-shaped member of this example, in the main step, since the forming load when the cold forging process is performed can be kept small, a press machine used to perform the forging process can be made compact. Furthermore, material cost can be reduced because the yield of the metal material that constitutes the outer ring 2 can be easily improved. Furthermore, since damage such as cracks is less likely to occur in the workpiece, a rate of defective products can be reduced.

Additionally and/or alternatively, a finishing step of performing a cutting process, a grinding process, or the like may be applied to any of the ring-shaped members 20 in FIG. 2(e), 20a in FIG. 20(f), and 20b in FIG. 2(g) to obtain a ring-shaped member as a final product including an outer ring 2 having a finished shape.

### [Second example]

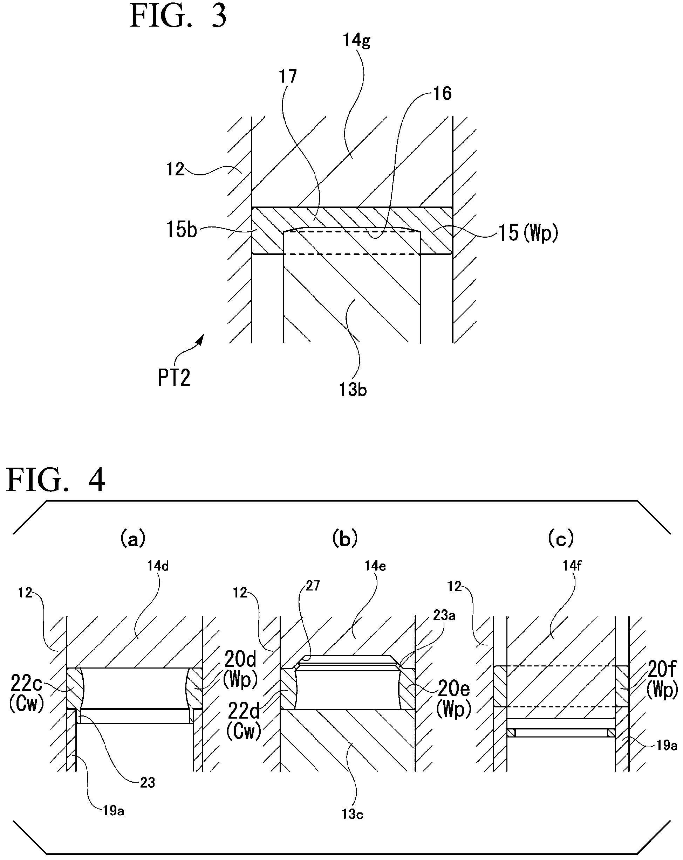

A second example will be described with reference to FIG. 3.

In this example, in the main step of manufacturing the outer ring 2 (refer to FIG. 1), a process for obtaining a cylindrical second material 15 with a bottom from a disk-shaped first material 11 (refer to FIG. 2(b)) is different from that in the first example. In this example, the forward extrusion process is used as the process. In this example, the forward extrusion process is performed using a mold (a punching tool, a tool set) as shown in FIG. 3.

The mold shown in FIG. 3 includes a die 12 similar to that shown in FIG. 2(b), a columnar die pin 13b, and a columnar punch 14g. The die pin 13b has an outer diameter smaller than an inner diameter of the die 12, and is disposed coaxially inside a lower portion of the die 12. The punch 14g has an outer diameter slightly smaller than the inner diameter of the die 12, and is disposed inside the upper portion of the die 12 without any wobble in the radial direction.

When the forward extrusion process is performed on the first material 11 using the mold shown in FIG. 3, the punch 14g is retracted upward, and the first material 11 is fitted into the die 12 without any wobble in the radial direction and is placed on the upper surface of the die pin 13b. In this state, the punch 14g is moved down to crush the radially inner portion of the first material 11 in the axial direction between the upper surface of the die pin 13b and the lower surface of the punch 14g. Thus, by causing the metal material of the radially inner portion to flow outward in the radial direction, an axial dimension of the radially outer portion is enlarged, the recessed portion 16 that opens downward is formed in the radially inner portion, and thus a cylindrical second material 15 with a bottom that has the recessed portion 16 and the bottom portion 17 is obtained.

In one example of the forward extrusion process shown in FIG. 3, a workpiece Wp supported by the punch 14g moves relatively to the die pin 13b (the first member). The punch 14g and the workpiece Wp move in the axial direction to approach the die pin 13b. As the workpiece Wp and the die pin 13b move relative to each other in the axial direction, the die pin 13b is pressed against a radially inner region in the workpiece Wp, and the tip end portion of the die pin 13b is inserted into the workpiece Wp. A part of the material flows from the radially inner side to the radially outer side of the workpiece Wp. In addition, in a radially outer region of the workpiece Wp, the material flows in the same direction as the movement direction of the punch 14g (forward flow). In the workpiece Wp, a thickness of a radially inner region decreases while a thickness of the radially outer region increases. A recessed portion (a recess) 16 is formed in the radially inner region of the workpiece Wp, and a peripheral portion 15b is formed in the radially outer region surrounding the recessed portion 16. As the axial length of the peripheral portion 15b increases, the overall axial length of the workpiece Wp (the distance between the first axial end and the second axial end) increases.

Additionally and/or alternatively, a method for obtaining a cylindrical second material 15 with a bottom from a disk-shaped first material 11 (refer to FIG. 2(b)) is not limited to the backward extrusion process of the first example, and the forward extrusion process of this example may also be adopted. The other configurations and effects of this example are similar to those of the first example.

### [Third example]

A third example will be described with reference to FIG. 4.

In this example, the additional step of manufacturing the outer ring 2 (refer to FIG. 1) is different from that in the first example. In this example, the step shown in FIG. 3 may also be adopted instead of the step shown in FIG. 2(c).

In this example, in the step shown in FIG. 4(a), the main body portion 22 of the ring-shaped member 20 (refer to FIG. 2(e)) is compressed in the axial direction to obtain a ring-shaped member 20d. In this example, the compression is performed using a mold (a punching tool, a tool set) as shown in FIG. 4(a).

The mold shown in FIG. 4(a) includes a die 12 and a sleeve 19a similar to those in FIG. 2(e), and a punch 14d similar to that in FIG. 2(f).

When the main body portion 22 of the ring-shaped member 20 (refer to FIG. 2(e)) is compressed in the axial direction using the mold shown in FIG. 4(a), in a state in which the punch 14d is retracted upward, and the burr 23 of the ring-shaped member 20 faces downward, the main body portion 22 of the ring-shaped member 20 is fitted into the die 12 without any wobble in the radial direction, thus the outer circumferential surface of the main body portion 22 is restrained to prevent the diameter of the outer circumferential surface from being enlarged, and the lower surface of the main body portion 22 is supported by the upper surface of the sleeve 19a. In this state, the punch 14d is moved down to compress the main body portion 22 in the axial direction between the upper surface of the sleeve 19a and the lower surface of the punch 14d. Thus, the main body portion 22 is formed into a cylindrical main body portion 22c having an axial dimension the same as that of the outer ring 2, thereby obtaining a ring-shaped member 20d having the main body portion 22c and the burr 23.

In this example, in the step of obtaining the ring-shaped member 20d, the chamfered portion 8 (refer to FIG. 1) is not formed at the connection portion between the axial side surface closer to the burr 23, which is the lower surface of the main body portion 22c, and the outer circumferential surface. This point differs from the step of FIG. 2(f) in the first example.

In this example, in the step shown in FIG. 4(b), the ring-shaped member 20d is processed to obtain a ring-shaped member 20e. In this example, the compression is performed using a mold (a punching tool, a tool set) as shown in FIG. 4(b).

The mold shown in FIG. 4(b) includes a die 12 similar to that in FIG. 2(b), a punch 14e similar to that in FIG. 2(g), and a columnar die pin 13c. The die pin 13c has an outer diameter slightly smaller than the inner diameter of the die 12, and is disposed inside the lower portion of the die 12 without any wobble in the radial direction.

When the process of the ring-shaped member 20d is performed using the die shown in FIG. 4(b), in a state in which the punch 14e is retracted upward and the burr 23 of the ring-shaped member 20d is directed upward, the main body portion 22c of the ring-shaped member 20d is fitted into the die 12 without any wobble in the radial direction, thus the outer circumferential surface of the main body portion 22c is restrained to prevent the diameter of the outer circumferential surface from being enlarged, and the lower surface of the main body portion 22c is supported by the upper surface of the die pin 13c. In this state, the punch 14e is moved downward and the burr knockdown surface 27 having a conical concave surface shape provided on the lower surface of the punch 14e is pressed against the cylindrical burr 23 from above, thereby knocking down the burr 23 inward in the radial direction to form a conical cylindrical burr 23a. Thus, a ring-shaped member 20e having the main body portion 22d and the burr 23a is obtained.

In this example, in the step of obtaining the ring-shaped member 20e, the chamfered portion 8 (refer to FIG. 1) is not formed at the connection portion between the axial side surface on the side farther from the burr 23, which is the lower surface of the main body portion 22d, and the outer circumferential surface. This point differs from the step of FIG. 2(g) in the first example.

In this example, in the step shown in FIG. 4(c), a ring-shaped member 20f is obtained by performing a process on the ring-shaped member 20e.

In this step, similar to the step shown in FIG. 2(h) of the first example, the inner circumferential portion and the burr 23a of the main body portion 22d of the ring-shaped member 20e are shaved and removed in the axial direction using the sleeve 19c and punch 14f inside the die 12, and the cylindrical ring-shaped member 20f is obtained.

In this example, a finishing step of performing a cutting process, a grinding process, or the like is then applied to the ring-shaped member 20f to obtain the outer ring 2 having a finished shape. The chamfered portion 8 of the outer ring 2 is formed in this finishing step.

In this example, because the chamfered portion 8 of the outer ring 2 is not formed in the additional step, it is possible to simplify a shape of the mold (the punching tool, the tool set) used in the additional step, specifically, the inner circumferential surface of the die 12 in FIGS. 4(a) and 4(b). The other configurations and effects of this example are similar to those of the first example.

Additionally and/or alternatively, the outer ring 2 having a finished shape may be obtained by the finishing step of performing a cutting process, a grinding process, or the like is applied to either the ring-shaped member 20d in FIG. 4(a) or the ring-shaped member 20e in FIG. 4(b).

### [Fourth example]

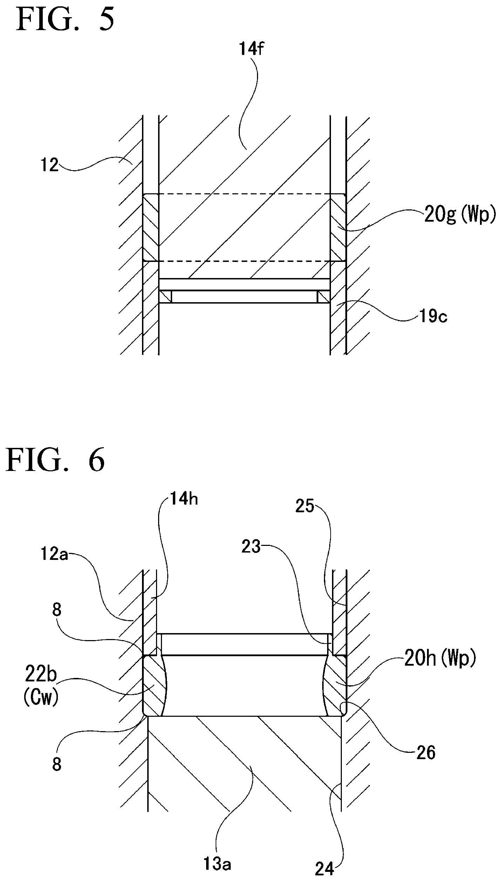

A fourth example will be described with reference to FIG. 5.

In this example, the additional step of manufacturing the outer ring 2 (refer to FIG. 1) differs from that in the first example. In this example, the step shown in FIG. 3 may also be adopted instead of the step shown in FIG. 2(c).

In this example, in the step shown in FIG. 5, a ring-shaped member 20g is obtained by performing a process on the ring-shaped member 20 (refer to FIG. 2(e)). In this example, the process is performed using a mold (a punching tool, a tool set) as shown in FIG. 5.

The mold shown in FIG. 5 includes a die 12, a sleeve 19c, and a punch 14f similar to those in FIG. 2(h).

When the process is performed on the ring-shaped member 20 (refer to FIG. 2(e)) using the mold shown in FIG. 5, in a state in which the punch 14f is retracted upward, and the burr 23 of the ring-shaped member 20 is directed downward, the main body portion 22 of the ring-shaped member 20 is fitted into the die 12 without any wobble in the radial direction, and the lower surface of the main body portion 22 is supported by the upper surface of the sleeve 19c. In this state, the punch 14f is moved down, and the inner circumferential portion of the main body portion 22 and the burr 23 are shaved and removed in the axial direction by the punch 14f, and thus the cylindrical ring-shaped member 20g is obtained.

In this example, a finishing step of performing a cutting process, a grinding process, or the like is then applied to the ring-shaped member 20g to obtain the outer ring 2 having a finished shape. The finishing of the axial dimension of the outer ring 2 and the formation of each of the chamfered portion 8 of the outer ring 2 are performed in this finishing step.

In this example, since the additional step does not include finishing the axial dimension of the outer ring 2, forming each of the chamfered portions 8 of the outer ring 2, and knocking down the cylindrical burr 23 inward in the radial direction, the number of steps in the additional step may be reduced. The other configurations and effects of this example are similar to those of the first example.

### [Fifth example , not forming part of the present invention ]

A fifth example will be described with reference to FIG. 6.

In this example, the additional step of manufacturing the outer ring 2 (refer to FIG. 1) differs from that in the first example. The additional step in this example is the same as that in the first example up to FIG. 2(f). In this example, the step shown in FIG. 3 may also be adopted instead of the step shown in FIG. 2(c).

In this example, in the step shown in FIG. 6, a ring-shaped member 20h is performed by performing a process on the ring-shaped member 20a obtained in the step shown in FIG. 2(f). In this example, the process is performed using a mold (a punching tool, a tool set) as shown in FIG. 6.

The mold shown in FIG. 6 includes a die 12a and a die pin 13a similar to those in FIG. 2(g), and a punch 14h. The punch 14h is formed to have a cylindrical shape and has an outer diameter slightly smaller than the inner diameter of the large diameter cylindrical surface portion 25 of the die 12a, and an inner diameter the same as or slightly larger than the outer diameter of the burr 23. The punch 14h is disposed inside the large diameter cylindrical surface portion 25 without any wobble in the radial direction.

When a process of the ring-shaped member 20a is performed using the mold shown in FIG. 6, in a state in which the punch 14h is retracted upward, and the burr 23 of the ring-shaped member 20a is directed upward, the main body portion 22a of the ring-shaped member 20a is fitted into the large diameter cylindrical surface portion 25 of the die 12a without any wobble in the radial direction, thus the outer circumferential surface of the main body portion 22a is restrained to prevent the diameter of the outer circumferential surface from being enlarged, and the lower surface of the main body portion 22a is supported by the chamfering process surface 26 and the upper surface of the die pin 13a. In this state, the punch 14h is moved down, and the lower surface of punch 14h is pressed against the upper surface of the main body portion 22a, thereby strongly pressing the connection portion between an axial side surface on the side away from the burr 23, which is the lower surface of the main body portion 22a, and the outer circumferential surface against the chamfering process surface 26, and thus forming a chamfered portion 8 at the connection portion. That is, a main body portion 22b having the chamfered portions 8 is formed at the connection portions between the outer circumferential surface and the side surfaces on both axial sides. However, in this example, the cylindrical burr 23 is not processed at this time. This point differs from the step of FIG. 2(g) in the first example.

In this example, a finishing step of performing a cutting process, a grinding process, or the like is then applied to the ring-shaped member 20h to obtain the outer ring 2 having a finished shape. Finishing of the inner diameter of the outer ring 2 and removal of the burr 23 are performed in this finishing step.

In this example, the number of steps in the additional step may be reduced because the finishing of the inner diameter of the outer ring 2 and the removal of the burr 23 are not performed in the additional step. The other configurations and effects of this example are similar to those of the first example.

### [Sixth example]

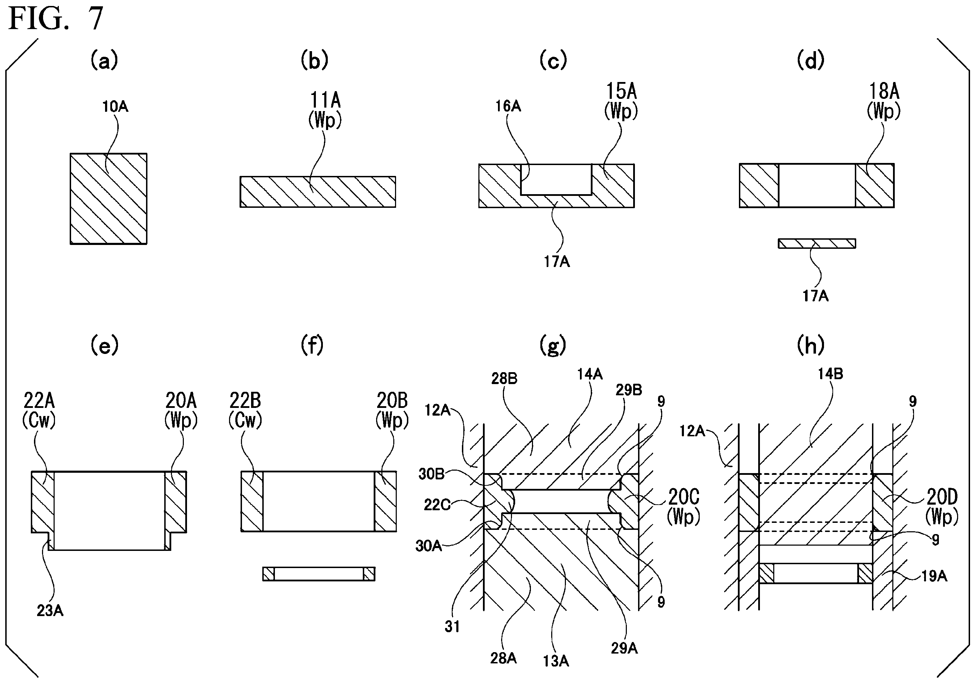

A sixth example will be described with reference to FIGS. 7(a) to 7(h).

This example is an example of manufacturing a ring-shaped member for obtaining the inner ring 3 of the rolling bearing 1 shown in FIG. 1 with the method for manufacturing a ring-shaped member according to one aspect.

The method for manufacturing the inner ring 3 in this example includes a main step and an additional step of obtaining a ring-shaped member , and a finishing step of obtaining a final shape of the inner ring 3 by a subsequent finishing step. All processes in these steps are cold processes.

In this example, the main step is the same as the main step shown in FIG. 2(a) to FIG. 2(e) in the first example. That is, in this example, a columnar billet 10A as shown in FIG. 7(a) is subjected to an upsetting process in which the billet 10A is crushed in the axial direction, a disk-shaped first material 11A as shown in FIG. 7(b) is obtained, a backward extrusion process is performed on the first material 11A to obtain a cylindrical second material 15A with a bottom having a recessed portion 16A and a bottom portion 17A as shown in FIG. 7(c), the bottom portion 17A of the second material 15A is punched out, and a cylindrical third material 18A is obtained as shown in FIG. 7(d). In this example, the process for obtaining the second material 15A may also be performed by a forward extrusion process instead of the backward extrusion process. Furthermore, in a state in which the diameter of the outer circumferential surface of the third material 18A is prevented from being enlarged, an ironing process is performed on the inner circumferential surface of the third material 18A to form a cylindrical main body portion 22A having an inner circumferential surface having an inner diameter larger than the inner diameter of the third material 18A and an axial dimension larger than the axial dimension of the third material 18A, thereby obtaining a ring-shaped member 20A as shown in FIG. 7(e). In this example, the ring-shaped member 20A also includes a cylindrical burr 23A connected to an inner circumferential edge portion of a lower end of the main body portion 22A.

In this example, in the additional step, the inner circumferential portion and the burr 23A of the main body portion 22A of the ring-shaped member 20A are shaved and removed in the axial direction by a step similar to that shown in FIG. 5 of the fourth example, and a ring-shaped member 20B configured only of a cylindrical main body portion 22B as shown in FIG. 7(f) is obtained. In the additional step, the ring-shaped member 20B is further processed to obtain a ring-shaped member 20C configured of only a cylindrical main body portion 22C as shown in FIG. 7(g). In this example, the process is performed using a mold (a punching tool, a tool set) as shown in FIG. 7(g).

The mold shown in FIG. 7(g) includes a die 12A, a die pin 13A, and a punch 14A.

The die 12A has a cylindrical inner circumferential surface on the inside of which the die pin 13A and the punch 14A are disposed. An inner diameter of the die 12A is the same as an outer diameter of the ring-shaped member 20B.

The die pin 13A is configured in a stepped columnar shape and includes a columnar main body portion 28A having an outer diameter slightly smaller than the inner diameter of the die 12A, and a columnar small diameter portion 29A having a diameter smaller than the main body portion 28A and protruding upward from a center portion of an upper surface of the main body portion 28A. An outer diameter of the small diameter portion 29A is the same as the inner diameter of the ring-shaped member 20B. The die pin 13A has a chamfering process surface 30A at a connection portion between an outer circumferential surface of the small diameter portion 29A and an upper surface of the main body portion 28A, and the chamfering process surface 30A having a concave arc-shaped cross-sectional shape that is curved and inclined in a direction in which an outer diameter thereof increases downward. The main body portion 28A of the die pin 13A is fitted inside the lower portion of the die 12A without any wobble in the radial direction.

The punch 14A is configured in a stepped columnar shape and includes a columnar main body portion 28B having an outer diameter slightly smaller than an inner diameter of the die 12A, and a columnar small diameter portion 29B having a smaller diameter than the main body portion 28B and protruding downward from a center portion of a lower surface of the main body portion 28B. An outer diameter of the small diameter portion 29B is the same as the inner diameter of the ring-shaped member 20B. The punch 14A has a chamfering process surface 30B at a connection portion between the outer circumferential surface of the small diameter portion 29B and the lower surface of the main body portion 28B, the chamfering process surface 30B having a concave arc-shaped cross-sectional shape that is curved and inclined in a direction in which the outer diameter increases upward. The main body portion 28B of the punch 14A is fitted inside the upper portion of the die 12A without any wobble in the radial direction.

When a process is performed on the ring-shaped member 20B using the mold shown in FIG. 7(g), by retracting the punch 14A upward and fitting the ring-shaped member 20B into the die 12A without any wobble in the radial direction, the outer circumferential surface of the ring-shaped member 20B is restrained to prevent the diameter of the outer circumferential surface from being enlarged, and the small diameter portion 29A of the die pin 13A is inserted into the inside of the lower portion of the ring-shaped member 20B without any wobble in the radial direction. Furthermore, the punch 14A is moved down, and the small diameter portion 29B of the punch 14A is inserted into the inside of the upper portion of the ring-shaped member 20B without any wobble in the radial direction. In this state, the punch 14A is further moved, the connection portion between the lower axial side surface and the inner circumferential surface of the ring-shaped member 20B is strongly pressed against the chamfering process surface 30A of the die pin 13A, and the connection portion between the upper axial side surface and the inner circumferential surface of the ring-shaped member 20B is strongly pressed against the chamfering process surface 30B of the punch 14A. Thus, a chamfered portion 9 is formed at each of the connection portions. Furthermore, the ring-shaped member 20B is compressed in the axial direction between the upper surface of the main body portion 28A of the die pin 13A and the lower surface of the main body portion 28B of the punch 14A. Thus, the axial dimension of the ring-shaped member 20B is reduced to the same size as the axial dimension of the inner ring 3. In this example, a part of the metal material that flows as a result of the reduction enters a space between the upper surface of the small diameter portion 29A of the die pin 13A and the lower surface of the small diameter portion 29B of the punch 14A, and an excess material portion 31 that protrudes inward in the radial direction is formed at an intermediate portion of the main body portion 22C in the axial direction. That is, in this example, the ring-shaped member 20C is obtained by the above-described process.

In this example, in the additional step, a cylindrical ring-shaped member 20D as shown in FIG. 7(h) is obtained by performing a process on the ring-shaped member 20C. In this example, the process is performed using a mold (a punching tool, a tool set) as shown in FIG. 7(h).

The mold shown in FIG. 7(h) includes a die 12A similar to that shown in FIG. 7(g), a cylindrical sleeve 19A, and a punch 14B. The sleeve 19A has an outer diameter slightly smaller than an inner diameter of the die 12A and an inner diameter the same as that of the inner ring 3. The sleeve 19A is disposed inside a lower portion of the die 12A without any wobble in the radial direction. The punch 14B has the same outer diameter as the inner ring 3 and is disposed inside the die 12 coaxially.

When a process is performed on the ring-shaped member 20C using the mold shown in FIG. 7(h), the punch 14B is retracted upward, the ring-shaped member 20C is fitted into the die 12 without any wobble in the radial direction, and the lower surface of the ring-shaped member 20C is supported by the upper surface of the sleeve 19A. In this state, the punch 14B is moved down, the excess material portion 31 is shaved and removed in the axial direction by the punch 14B, and thus a cylindrical ring-shaped member 20D is obtained. The ring-shaped member 20D has an axial dimension the same as the axial dimension of the inner ring 3, an outer diameter the same as the outer diameter of the inner ring 3, and an inner diameter the same as the inner diameter of the inner ring 3.

In this example, a finishing step of performing a cutting process, a grinding process, or the like is then applied to the ring-shaped member 20D to obtain the inner ring 3 having a finished shape. Other configurations and effects of this example are similar to those of the first example.

When the method for manufacturing a ring-shaped material of the present disclosure is performed, at least some of the operations of finishing the axial dimension, forming the chamfered portion, and removing the burr may also be performed on the inner ring 3 in the finishing step.

For example, when the manufacturing method of the present disclosure is performed, the inner ring 3 having a finished shape may be obtained by applying the finishing step of performing a cutting process, a grinding process, or the like to any one of the ring-shaped members 20A in FIG. 7(e), the ring-shaped member 20B in FIG. 7(f), and the ring-shaped member 20C in FIG. 7(g).

### [Seventh example]

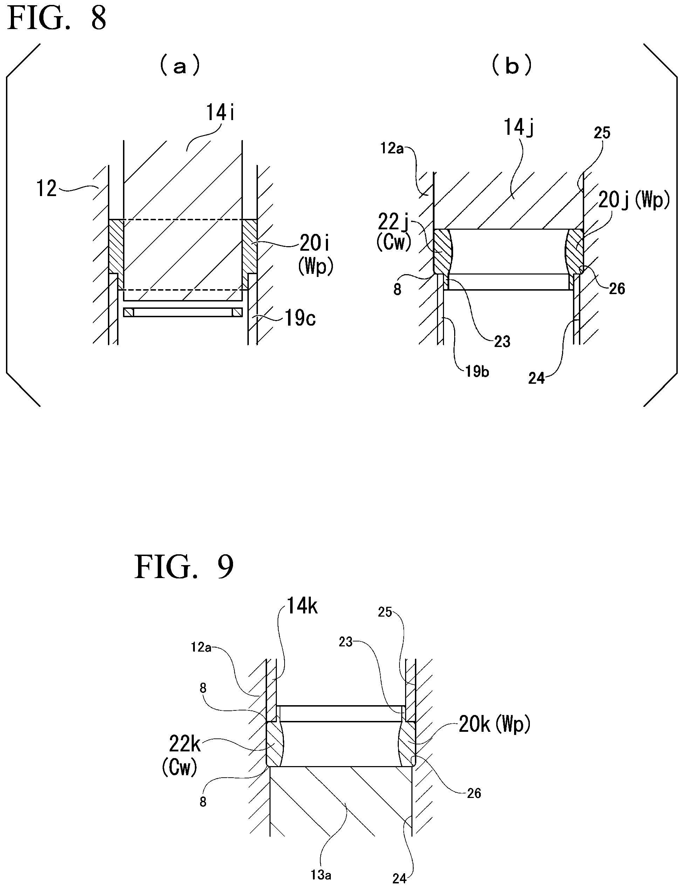

A seventh example will be described with reference to FIG. 8.

In this example, a timing of the shaving process is different from that in the first example. In this example, after the step shown in FIG. 2(e), the shaving process is performed using a punch 14i as shown in FIG. 8(a). This shaving process is similar to the process shown in FIG. 2(h). In this example, after the shaving process, a main body portion 22j of a ring-shaped member 20j is compressed in the axial direction using a punch 14j as shown in FIG. 8(b). This compression process is the same as the process shown in FIG. 2(f). In this example, unlike the first example, a step of removing the burr is not provided, and the ring-shaped member 20j having the burr 23 is obtained. If necessary, the burr 23 may be removed in a subsequent step.

### [Eighth example]

An eighth example will be described with reference to FIG. 9.

In this example, a timing of the shaving process is different from that of the first example, and is the same as that of the seventh example. In addition, the forward extrusion process shown in FIG. 3 is used as a process for obtaining the cylindrical second material 15 with the bottom from a disk-shaped first material 11 (refer to FIG. 2(b)). In this example, after the shaving process, a main body portion 22k of a ring-shaped member 20k is compressed in the axial direction using a punch 14k as shown in FIG. 9. This compression process is similar to the process shown in FIG. 6. In this example, unlike the first example, a step of removing the burr is not provided, and the ring-shaped member 20k having the burr 23 is obtained. If necessary, the burr 23 may be removed in a subsequent step.

### [Ninth example, nor forming part of the present invention (no burr)]

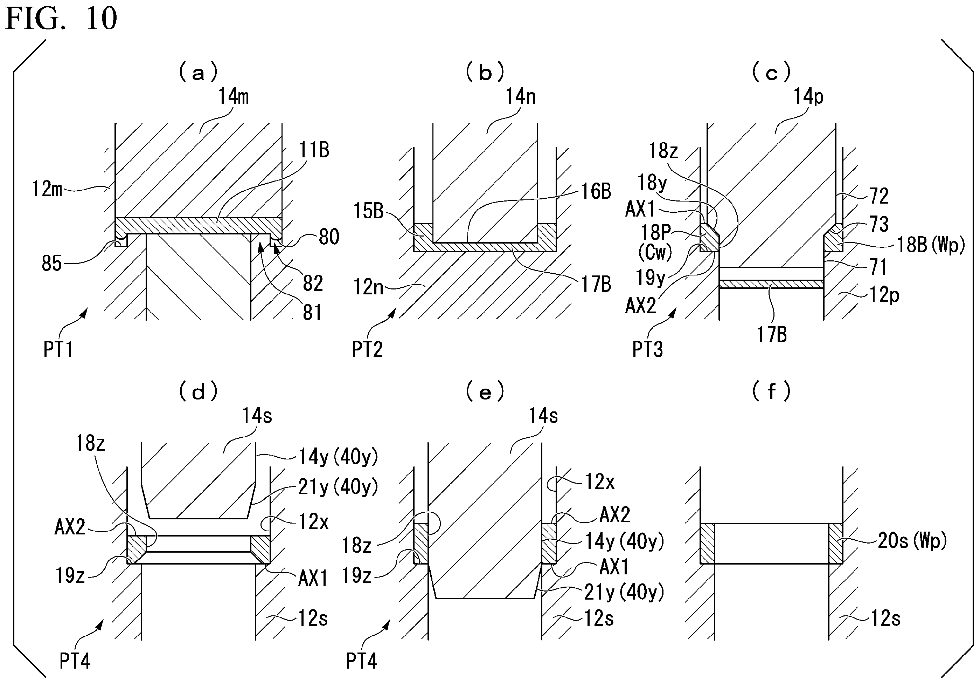

A ninth example will be described with reference to FIG. 10.

In one example of a step shown in FIG. 10(a), the punching tool PT1 is used to form a workpiece Wp having a different shape from the example in FIG. 2(b). In FIG. 10(a), the workpiece Wp after the process in the first step has a substantially columnar shape (a substantially circular plate shape) including a first axial surface, a second axial surface, and an outer circumferential surface, and further has a first portion 81 and a second portion 82 having different thicknesses in an outer region in the radial direction. In one example, the thickness (the axial length) of the second portion 82 is larger than the thickness (the axial length) of the first portion 81. The second portion 82 is located outward in the radial direction compared to the first portion 81. In the example of FIG. 10(a), the workpiece Wp includes, in the outer region in the radial direction, the second portion 82 including a protrusion portion 80 that protrudes in the axial direction. A groove 85 is provided in one surface of the die unit. When the material is crushed by a punch 14m, a part of the material flows into the groove 85, and a thickness change (a thicker portion, a larger capacity portion) is formed in the outer region in the radial direction of the workpiece Wp. For example, the punching tool PT1 is designed on the basis of shape parameters of a final ring-shaped member and process parameters of other steps, and the like, and a shape of the workpiece Wp at an initial stage is set. Due to shape control at the initial stage, the efficiency of material usage (the material yield) is improved. In addition, the quality of the product (for example, the strength of the product) is improved based on a flow pattern of the material.

In an example of the backward extrusion process shown in FIG. 10(b), a punch 14n (a first member) moves relatively to the workpiece Wp supported on a support surface of a die unit 12n. The punch 14n moves in the axial direction to approach the support surface of the die unit 12n. As the workpiece Wp and the punch 14n move relative to each other in the axial direction, the punch 14n is pressed against an inner region of the workpiece Wp in the axial direction, and a tip end portion of the punch 14n is inserted into the workpiece Wp. A part of the material flows from the radially inner side to the radially outer side of the workpiece Wp. Also, in the outer region of the workpiece Wp in the radial direction, the material flows in a direction opposite to a movement direction of the punch 14n (backward flow). In the workpiece Wp, a thickness of the inner region in the radial direction decreases while a thickness of the outer region in the axial direction increases. A depression (a recessed portion) 16B is formed in the inner region of the workpiece Wp in the radial direction, and a peripheral portion 15b surrounding the depression 16B is formed in the outer region in the radial direction. As the axial length of the peripheral portion 15b increases, the overall axial length of workpiece Wp (the distance between the first axial end and the second axial end) increases.

In an example of the process shown in FIG. 10(c), the punch 14p has a tip end portion 71, an intermediate portion 72, and a shaping part 73 located between the tip end portion 71 and the intermediate portion 72 in the axial direction. For example, the tip end portion 71 has a first outer diameter. The first outer diameter is set to be substantially the same as a size of the bottom portion 17 of the workpiece Wp before punching. The intermediate portion 72 has a second outer diameter. The second outer diameter is set to be larger than a size of the bottom portion 17. The shaping part 73 has an inclined surface inclined with respect to a central axis of the punch 14p. For example, a diameter of the inclined surface of the shaping part 73 gradually increases from the tip end portion 71 side toward the intermediate portion 72 side. In other examples, the shaping part 73 may have a different shape than that described above. For example, the shaping part 73 may have a stepped shape and/or a curved shape.

In FIG. 10(c), similarly to the example in FIG. 2(d), during the relative movement between the workpiece Wp and punch 14p, a bottom portion 17B of the depression is punched out using the punch 14p, and a ring-shaped member 18B (theworkpiece Wp) is formed. The workpiece Wp has a main body portion 18p (a circumferential wall Cw) surrounding an opening 18z. Additionally, substantially simultaneously with or immediately after the punching, the shaping part 73 of the punch 14p is pressed against the workpiece Wp, the shape of the workpiece Wp is changed. During the relative movement of the punch 14p, the material of the workpiece Wp flows in accordance to contact with the shaping part 73. For example, an inclined surface 18y is formed at a corner portion between a first axial surface AX1 and an inner circumferential surface of the circumferential wall Cw.

In an example of the process shown in FIGS. 10(d) and 10(e), like the example of FIG. 2(e), in a state in which the enlargement of the outer diameter of the circumferential wall Cw is curbed, a process part 40y of the punch 14s is pressed against the inner circumferential surface of the circumferential wall Cw, and an inner diameter of the circumferential wall Cw is enlarged. The inner diameter of the circumferential wall Cw is enlarged while the outer diameter is maintained over the entire axial and circumferential directions. The overall thickness of the circumferential wall Cw decreases, and the axial length of the circumferential wall Cw increases.

Here, prior to the process using the punch 14s shown in FIG. 10(d), an orientation of the workpiece Wp set in the die unit is reversed. That is, in the step shown in FIG. 10(c), the second axial surface AX2 of the workpiece Wp is supported by the die unit, and the punch 14 is inserted into the workpiece Wp from the first axial surface AX1 side. On the other hand, in the step shown in FIG. 10(d), the first axial surface AX1 is supported by the die unit, and a punch (a third member) 14s is inserted into the workpiece from the second axial surface AX2 side.

As shown in FIG. 10(d), the workpiece (Wp) before the process has a small thickness and a small capacity in a portion close to the first axial surface, and also has a large thickness and a large capacity in a portion close to the second axial surface. In this step, the punch (the third member) 14s is inserted into the workpiece Wp from the first axial surface AX1 side which has a larger capacity. As the punch 14s moves in the axial direction, a flow occurs in which the material moves from the second axial surface AX2 side to the first axial surface AX1 side. As the punch 14s moves in the axial direction, a part of the material flows from a larger capacity portion to a smaller capacity portion. Due to this flow of the material, the capacity (the thickness) of the material is made uniform over the entire axial direction of the circumferential wall. As a result, a ring-shaped member 20s having substantially no burr is obtained, as shown in FIG. 10(e). In this example, the efficiency of material usage (the material yield) is improved by curbing the generation of burr, or the like. Also, the quality of the product is improved (for example, the strength of the product is improved) based on the flow pattern of the material.

The above-described embodiments may be combined as appropriate to the extent that no contradiction occurs, the scope of the invention being defined by the appended claims.

### REFERENCE SIGNS LIST

1 Rolling bearing
2 Outer ring
3 Inner ring
4 Rolling element
5 Outer ring raceway
6 Inner ring raceway
7 Holder
8 Chamfered portion
9 Chamfered portion
10, 10A Billet
11, 11A First material
12, 12a, 12A Die
13, 13a, 13b, 13A Die pin
14, 14a, 14b, 14c, 14d, 14e, 14f, 14g, 14h, 14A, 14B Punch
15, 15A Second material
16, 16A Recessed portion
17, 17A Bottom portion
18, 18A Third material
19, 19a, 19b, 19c, 19A Sleeve
20, 20a, 20b, 20c, 20d, 20e, 20f, 20g, 20h, 20A, 20B, 20C, 20D Ring-shaped member
21 Ironing surface
22, 22a, 22b, 22c, 22d, 22A, 22B, 22C Main body portion
23, 23a, 23A Burr
24 Small diameter cylindrical surface portion
25 Large diameter cylindrical surface portion
26 Chamfering process surface
27 Burr knockdown surface
28A, 28B Main body portion
29A, 29B Small diameter portion
30A, 30B Chamfering process surface
31 Excess material portion

## Claims

1. A method for manufacturing a ring-shaped member, comprising:
a first step of preparing a workpiece (Wp), the workpiece (Wp) having a first axial surface which is one end surface in an axial direction, and a second axial surface which is another end surface in the axial direction;
a second step of pressing a first member (14a) against the workpiece (Wp) to form a depression (16) having a depth in the axial direction in the workpiece (Wp);
a third step of punching out a bottom portion (17) of the depression (16) in the workpiece (Wp) using a second member (14b) to form an inner circumferential wall (Cw) surrounding an opening (18z); and
a fourth step of deforming the inner circumferential wall (Cw) in accordance with relative movement between the workpiece (Wp) and a third member (14c) to enlarge an axial length of the inner circumferential wall (Cw),
wherein in the fourth step, the first axial surface of the workpiece (Wp) is supported by a support surface (19z) of a support member (19a), and a tip end of the third member (14c) and the support surface (19z) of the support member (19a) pass each other in the axial direction,
**characterized in that**
the method further comprises a fifth step of shaving the inner circumferential wall (Cw) of the workpiece (Wp) and removing by said shaving a burr (23) that was formed in the fourth step at the end portion of the inner circumferential wall (Cw), the shaving taking place by moving the workpiece (Wp) and a fourth member (14f) relative to each other.

2. The method for manufacturing a ring-shaped member according to claim 1, wherein the second step includes enlarging an axial length of a peripheral portion of the depression (16) in the workpiece (Wp).

3. The method for manufacturing a ring-shaped member according to claim 1 or 2, wherein the fourth step includes pressing the third member (14c) against an inner surface of the inner circumferential wall (Cw) to enlarge an inner diameter of the inner circumferential wall (Cw) in a state in which an enlargement of an outer diameter of the inner circumferential wall (Cw) is curbed.

4. A method for manufacturing a bearing, comprising manufacturing a ring-shaped member with the method according to any one of claims 1 to 3.

5. A method for manufacturing a machine part, comprising manufacturing a ring-shaped member with the method according to any one of claims 1 to 3.

6. A method for manufacturing a mechanical device, comprising manufacturing a ring-shaped member with the method according to any one of claims 1 to 3.

7. A method for manufacturing a vehicle, comprising manufacturing a ring-shaped member with the method according to any one of claims 1 to 3.

8. A bearing element, comprising:
a main body (101, 102) having a ring shape,
wherein the main body (101, 102) has a first axial surface (AF1) which is one end surface in an axial direction, a second axial surface (AF2) which is another end surface in the axial direction, an inner circumferential surface (ICS), an outer circumferential surface (OCS), a raceway surface provided on the inner circumferential surface (ICS), a first chamfered portion (CF1) between the outer circumferential surface (OCS) and the first axial surface (AF1), and a second chamfered portion (CF2) between the outer circumferential surface (OCS) and the second axial surface (AF2),
a metal flow of the main body (101, 102) has a first pattern (MFP1) which is continuous along the first chamfered portion (CF1) near a surface of the first chamfered portion (CF1), a second pattern (MFP2) which is continuous along the second chamfered portion (CF2) near a surface of the second chamfered portion (CF2), a third pattern (MFP3) which is continuous along the outer circumferential surface (OCS) near the outer circumferential surface (OCS), a fourth pattern (MFP4) that is continuous along the first axial surface (AF1) near the first axial surface (AF1), a fifth pattern (MFP5) that is continuous along the second axial surface (AF2) near the second axial surface (AF2), a sixth pattern (MFP6) near the inner circumferential surface (ICS) close to the first axial surface (AF1), and a seventh pattern (MFP7) near the inner circumferential surface (ICS) close to the second axial surface (AF2),
the sixth pattern (MFP6) includes a plurality of line elements having a convex shape toward the first axial surface (AF1),
the seventh pattern (MFP7) includes a plurality of line elements that are continuous along the inner circumferential surface (ICS),
an interval between the plurality of line elements in the seventh pattern (MFP7) is narrower than an interval between the plurality of line elements in the sixth pattern (MFP6),
in the sixth pattern (MFP6), the line elements in a region close to the first axial surface (AF1) have a relatively gradual bend, and in the sixth pattern (MFP6), the line elements in a region away from the first axial surface (AF1) have a relatively sharp bend,
the sixth pattern (MFP6) includes a pattern that intersects with the inner circumferential surface (ICS), and
the seventh pattern (MFP7) includes a pattern that intersects with the inner circumferential surface (ICS).

9. The bearing element according to claim 8, wherein the interval between the plurality of line elements in the seventh pattern (MFP7) is changed to gradually narrow toward a virtual intersection point between the inner circumferential surface (ICS) and the second axial surface (AF2).

10. The bearing element according to claim 8 or 9, further comprising a raceway surface (RWS) provided on the inner circumferential surface (ICS),
wherein the number of the plurality of line elements intersecting the raceway surface (RWS) between a straight line (SL1) passing through a center of the raceway surface (RWS) and extending in a radial direction and the second axial surface (AF2) is greater than the number of the plurality of line elements intersecting the raceway surface (RWS) between the straight line (SL1) and the first axial surface (AF1).

11. A bearing comprising the bearing element according to any one of claims 8 to 10.

12. A mechanical device comprising the bearing according to claim 11.

13. A vehicle comprising the bearing according to claim 11.

## Patentansprüche

1. Verfahren zum Herstellen eines ringförmigen Elementes, umfassend:
einen ersten Schritt des Fertigens eines Werkstücks (Wp), wobei das Werkstück (Wp) eine erste axiale Fläche, die eine Endfläche in einer axialen Richtung ist, und eine zweite axiale Fläche hat, die eine andere Endfläche in der axialen Richtung ist;
einen zweiten Schritt des Pressens eines ersten Elementes (14a) an das Werkstück (Wp) zum Ausbilden einer Vertiefung (16), die eine Tiefe in der axialen Richtung hat, in dem Werkstück (Wp);
einen dritten Schritt des Ausstanzens eines Bodenabschnitts (17) der Vertiefung (16) in dem Werkstück (Wp) unter Einsatz eines zweiten Elementes (14b) zum Ausbilden einer Innenumfangswand (Cw), die eine Öffnung (18z) umgibt; sowie
einen vierten Schritt des Verformens der Innenumfangswand (Cw) entsprechend relativer Bewegung des Werkstücks (Wp) und eines dritten Elementes (14c) zueinander zum Vergrößern einer axialen Länge der Innenumfangswand (Cw),
wobei in dem vierten Schritt die erste axiale Fläche des Werkstücks (Wp) von einer Tragefläche (19z) eines Trageelementes (19a) getragen wird und ein vorderes Ende des dritten Elementes (14c) und die Tragefläche (19z) des Trageelementes (19a) einander in der axialen Richtung passieren,
**dadurch gekennzeichnet, dass**
das Verfahren des Weiteren einen fünften Schritt des Schabens der Innenumfangswand (Cw) des Werkstücks (Wp) sowie des Entfernens eines Grats (23), der in dem vierten Schritt an dem Endabschnitt der Innenumfangswand (Cw) ausgebildet wurde, mittels des Schabens umfasst, wobei das Schaben stattfindet, indem das Werkstück (Wp) und ein viertes Element (14f) relativ zueinander bewegt werden.

2. Verfahren zum Herstellen eines ringförmigen Elementes nach Anspruch 1, wobei der zweite Schritt Vergrößern einer axialen Länge eines Randabschnitts der Vertiefung (16) in dem Werkstück (Wp) einschließt.

3. Verfahren zum Herstellen eines ringförmigen Elementes nach Anspruch 1 oder 2, wobei der vierte Schritt Pressen des dritten Elementes (14c) an eine Innenfläche der Innenumfangswand (Cw) zum Vergrößern eines Innendurchmessers der Innenumfangswand (Cw) in einem Zustand einschließt, in dem eine Vergrößerung eines Außendurchmessers der Innenumfangswand (Cw) eingeschränkt wird.

4. Verfahren zum Herstellen eines Lagers, das Herstellen eines ringförmigen Elementes mit dem Verfahren nach einem der Ansprüche 1 bis 3 umfasst.

5. Verfahren zum Herstellen eines Maschinenteils, das Herstellen eines ringförmigen Elementes mit dem Verfahren nach einem der Ansprüche 1 bis 3 umfasst.

6. Verfahren zum Herstellen einer mechanischen Vorrichtung, das Herstellen eines ringförmigen Elementes mit dem Verfahren nach einem der Ansprüche 1 bis 3 umfasst.

7. Verfahren zum Herstellen eines Fahrzeugs, das Herstellen eines ringförmigen Elementes mit dem Verfahren nach einem der Ansprüche 1 bis 3 umfasst.

8. Lagerelement, das umfasst:
einen Hauptkörper (101, 102) mit einer Ringform,
wobei der Hauptkörper (101, 102) eine erste axiale Fläche (AF1), die eine Endfläche in einer axialen Richtung ist, eine zweite axiale Fläche (AF2), die eine andere Endfläche in der axialen Richtung ist, eine Innenumfangsfläche (ICS), eine Außenumfangsfläche (OCS), eine Laufbahnfläche, die sich an der Innenumfangsfläche (ICS) befindet, einen ersten abgeschrägten Abschnitt (CF1) zwischen der Außenumfangsfläche (OCS) und der ersten axialen Fläche (AF1) sowie einen zweiten abgeschrägten Abschnitt (CF2) zwischen der Außenumfangsfläche (OCS) und der zweiten axialen Fläche (AF2) hat,
wobei ein Metallfluss des Hauptkörpers (101, 102) ein erstes Muster (MFP1), das entlang des ersten abgeschrägten Abschnitts (CF1) nahe einer Oberfläche des ersten abgeschrägten Abschnitts (CF1) kontinuierlich verläuft, ein zweites Muster (MFP2), das entlang des zweiten abgeschrägten Abschnitts (CF2) nahe einer Oberfläche des zweiten abgeschrägten Abschnitts (CF2) kontinuierlich verläuft, ein drittes Muster (MFP3), das entlang der Außenumfangsfläche (OCS) nahe der Außenumfangsfläche (OCS) kontinuierlich verläuft, ein viertes Muster (MFP4), das entlang der ersten axialen Fläche (AF1) nahe der ersten axialen Fläche (AF1) kontinuierlich verläuft, ein fünftes Muster (MFP5), das entlang der zweiten axialen Fläche (AF2) nahe der zweiten axialen Fläche (AF2) kontinuierlich verläuft, ein sechstes Muster (MFP6) nahe der Innenumfangsfläche (ICS) in der Nähe der ersten axialen Fläche (AF1), sowie ein siebtes Muster (MFP7) nahe der Innenumfangsfläche (ICS) in der Nähe der zweiten axialen Fläche (AF2) aufweist,
wobei das sechste Muster (MFP6) eine Vielzahl von Linienelementen aufweist, die eine konvexe Form in Richtung der ersten axialen Fläche (AF1) haben,
das siebte Muster (MFP7) eine Vielzahl von Linienelementen aufweist, die entlang der Innenumfangsfläche (ICS) kontinuierlich verlaufen,
ein Zwischenraum zwischen der Vielzahl von Linienelementen in dem siebten Muster (MFP7) schmaler ist als ein Zwischenraum zwischen der Vielzahl von Linienelementen in dem sechsten Muster (MFP6),
in dem sechsten Muster (MFP6) die Linienelemente in einem Bereich in der Nähe der ersten axialen Fläche (AF1) eine relativ allmähliche Biegung aufweisen und in dem sechsten Muster (MFP6) die Linienelemente in einem Bereich entfernt von der ersten axialen Fläche (AF1) eine relativ scharfe Biegung aufweisen,
das sechste Muster (MFP6) ein Muster aufweist, das sich mit der Innenumfangsfläche (ICS) schneidet, und
das siebte Muster (MFP7) ein Muster aufweist, das sich mit der Innenumfangsfläche (ICS) schneidet.

9. Lagerelement nach Anspruch 8, wobei der Zwischenraum zwischen der Vielzahl von Linienelementen in dem siebten Muster (MFP7) so geändert wird, dass er in Richtung eines virtuellen Schnittpunktes zwischen der Innenumfangsfläche (ICS) und der zweiten axialen Fläche (AF2) allmählich schmaler wird.

10. Lagerelement nach Anspruch 8 oder 9, das des Weiteren eine Laufbahnfläche (RWS) umfasst, die sich an der Innenumfangsfläche (ICS) befindet,
wobei die Anzahl der mehreren Linienelemente, die die Laufbahnfläche (RWS) zwischen einer geraden Linie (SL1), die durch eine Mitte der Laufbahnfläche (RWS) hindurch verläuft und sich in einer radialen Richtung erstreckt und der zweiten axialen Fläche (AF2) größer ist als die Anzahl der mehreren Liniensegmente, die die Laufbahnfläche (RWS) zwischen der geraden Linie (SL1) und der ersten axialen Fläche (AF1) schneiden.

11. Lager, das das Lagerelement nach einem der Ansprüche 8 bis 10 umfasst.

12. Mechanische Vorrichtung, die das Lager nach Anspruch 11 umfasst.

13. Fahrzeug, das das Lager nach Anspruch 11 umfasst.

## Revendications

1. Procédé de fabrication d'un élément annulaire, comprenant :
une première étape consistant à préparer une pièce à usiner (Wp), la pièce à usiner (Wp) ayant une première surface axiale qui est une surface d'extrémité dans une direction axiale, et une deuxième surface axiale qui est une autre surface d'extrémité dans la direction axiale ;
une deuxième étape consistant à presser un premier élément (14a) contre la pièce à usiner (Wp) pour former un renfoncement (16) ayant une profondeur dans la direction axiale dans la pièce à usiner (Wp) ;
une troisième étape consistant à découper une partie inférieure (17) du renfoncement (16) dans la pièce à usiner (Wp) à l'aide d'un deuxième élément (14b) pour former une paroi circonférentielle interne (Cw) entourant une ouverture (18z) ; et
une quatrième étape consistant à déformer la paroi circonférentielle interne (Cw) selon le mouvement relatif entre la pièce à usiner (Wp) et un troisième élément (14c) afin d'augmenter la longueur axiale de la paroi circonférentielle interne (Cw),
dans lequel, lors de la quatrième étape, la première surface axiale de la pièce à usiner (Wp) est supportée par une surface d'appui (19z) d'un élément de support (19a), et une extrémité du troisième élément (14c) et la surface d'appui (19z) de l'élément de support (19a) se croisent dans la direction axiale,
**caractérisé en ce que**
le procédé comprend en outre une cinquième étape consistant à parer la paroi circonférentielle interne (Cw) de la pièce à usiner (Wp) et d'éliminer, par ledit rabotage, une bavure (23) qui s'est formée lors de la quatrième étape au niveau de la partie d'extrémité de la paroi circonférentielle interne (Cw), le rabotage s'effectuant par déplacement relatif de la pièce à usiner (Wp) et d'un quatrième élément (14f).

2. Procédé de fabrication d'un élément annulaire selon la revendication 1, dans lequel la deuxième étape inclut l'agrandissement de la longueur axiale d'une partie périphérique du renfoncement (16) dans la pièce à usiner (Wp).

3. Procédé de fabrication d'un élément annulaire selon l'une des revendications 1 ou 2, dans lequel la quatrième étape inclut la presse du troisième élément (14c) contre une surface interne de la paroi circonférentielle interne (Cw) afin d'agrandir le diamètre interne de la paroi circonférentielle interne (Cw) dans un état où l'augmentation du diamètre externe de la paroi circonférentielle interne (Cw) est limitée.

4. Procédé de fabrication d'un roulement, comprenant la fabrication d'un élément annulaire avec le procédé selon l'une quelconque des revendications 1 à 3.

5. Procédé de fabrication d'une pièce de machine, comprenant la fabrication d'un élément annulaire avec le procédé selon l'une quelconque des revendications 1 à 3.

6. Procédé de fabrication d'un dispositif mécanique, comprenant la fabrication d'un élément annulaire avec le procédé selon l'une quelconque des revendications 1 à 3.

7. Procédé de fabrication d'un véhicule, comprenant la fabrication d'un élément annulaire avec le procédé selon l'une quelconque des revendications 1 à 3.

8. Élément de roulement, comprenant :
un corps principal (101, 102) ayant une forme annulaire,
dans lequel le corps principal (101, 102) a une première surface axiale (AF1) qui est une surface d'extrémité dans une direction axiale, une deuxième surface axiale (AF2) qui est une autre surface d'extrémité dans la direction axiale, une surface circonférentielle intérieure (ICS), une surface circonférentielle extérieure (OCS), une surface de roulement qui porte sur la surface circonférentielle intérieure (ICS), une première partie chanfreinée (CF1) entre la surface circonférentielle extérieure (OCS) et la première surface axiale (AF1), et une deuxième partie chanfreinée (CF2) située entre la surface circonférentielle extérieure (OCS) et la deuxième surface axiale (AF2),
un parcours de métal du corps principal (101, 102) a un premier motif (MFP1) qui est continu le long de la première partie chanfreinée (CF1) à proximité d'une surface de la première partie chanfreinée (CF1), un deuxième motif (MFP2) qui est continu le long de la deuxième partie chanfreinée (CF2) à proximité d'une surface de la deuxième partie chanfreinée (CF2), un troisième motif (MFP3) qui est continu le long de la surface circonférentielle extérieure (OCS) à proximité de la surface circonférentielle extérieure (OCS), un quatrième motif (MFP4) qui est continu le long de la première surface axiale (AF1) à proximité de la première surface axiale (AF1), un cinquième motif (MFP5) qui est continu le long de la deuxième surface axiale (AF2) à proximité de la deuxième surface axiale (AF2), un sixième motif (MFP6) à proximité de la surface circonférentielle intérieure (ICS) près de la première surface axiale (AF1), et un septième motif (MFP7) à proximité de la surface circonférentielle intérieure (ICS), à proximité de la deuxième surface axiale (AF2),
le sixième motif (MFP6) inclut une pluralité d'éléments linéaires ayant une forme convexe vers la première surface axiale (AF1),
le septième motif (MFP7) inclut une pluralité d'éléments linéaires qui sont continus le long de la surface circonférentielle intérieure (ICS),
l'intervalle entre la pluralité d'éléments linéaires dans le septième motif (MFP7) est plus étroit que l'intervalle entre la pluralité d'éléments linéaires dans le sixième motif (MFP6),
dans le sixième motif (MFP6), les éléments linéaires situés dans une région proche de la première surface axiale (AF1) présentent une courbure relativement progressive, et dans le sixième motif (MFP6), les éléments linéaires situés dans une région éloignée de la première surface axiale (AF1) présentent une courbure relativement prononcée,
le sixième motif (MFP6) inclut un motif qui coupe la surface circonférentielle intérieure (ICS), et
le septième motif (MFP7) inclut un motif qui coupe la surface circonférentielle intérieure (ICS).

9. Élément de roulement selon la revendication 8, dans lequel l'intervalle entre la pluralité d'éléments linéaires du septième motif (MFP7) est modifié de manière à se rétrécir progressivement vers un point d'intersection virtuel entre la surface circonférentielle intérieure (ICS) et la deuxième surface axiale (AF2).

10. Élément de roulement selon la revendication 8 ou 9, comprenant en outre une surface de roulement (RWS) prévue sur la surface circonférentielle intérieure (ICS),
dans lequel le nombre d'éléments linéaires de la pluralité d'éléments linéaires coupant la surface de roulement (RWS) entre une ligne droite (SL1) passant par le centre de la surface de roulement (RWS) et s'étendant dans une direction radiale et la deuxième surface axiale (AF2) est supérieur au nombre d'éléments linéaires de la pluralité d'éléments linéaires coupant la surface de roulement (RWS) entre la ligne droite (SL1) et la première surface axiale (AF1).

11. Roulement comprenant l'élément de roulement selon l'une quelconque des revendications 8 à 10.

12. Dispositif mécanique comprenant le roulement selon la revendication 11.

13. Véhicule comprenant le roulement selon la revendication 11.
